# EUROPEAN PATENT APPLICATION

(11) **EP 4 765 986 A1**
(43) Date of publication of application: **24.06.2026**
(21) Application number: 23949656.5
(22) Date of filing: 18.08.2023
(51) Int. Cl.: H04W 72/21, H04W 16/28, H04W 28/04, H04W 72/0446

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); SUN, Weiqi, Beijing 100190 (CN); WANG, Jing, Beijing 100190 (CN); CHEN, Lan, Beijing 100190 (CN)
(74) Representative: Hoffmann Eitle
(86) International application number: PCT/JP2023/029859
(87) International publication number: WO 2025/041194

(57) **Abstract**

A terminal according to one aspect of the present disclosure includes a control section that, when an uplink control channel (PUCCH) and an uplink shared channel (PUSCH) associated with different transmission/reception points or different control resource set pool indices overlap in a time domain, applies different UE operations in UL transmission, based on at least one of a feedback mode of a transmission confirmation signal (HARQ-ACK) and a content included in uplink control information (UCI) corresponding to the PUCCH, and a transmitting section that transmits at least one of the PUCCH and the PUSCH.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems, the UE can use one of a plurality of panels (or a plurality of beams) for uplink (UL) transmission. In Rel. 18 or later versions, in order to improve throughput/reliability of the UL, it is studied to support simultaneous multi-panel transmission (Simultaneous Transmission across Multiple Panels (STxMP) using a plurality of panels for one or more transmission/reception points (TRPs).

However, how to perform control when UL transmission (for example, simultaneous UL transmission) using a plurality of panels is supported is not sufficiently studied. Unless UL transmission using a plurality of panels is appropriately performed, this may cause reduction in system performance, such as reduction in throughput.

In view of this, the present disclosure has one object to provide a terminal, a radio communication method, and a base station that can appropriately control UL transmission even when UL transmission is performed using a plurality of panels. Solution to Problem

A terminal according to one aspect of the present disclosure includes a control section that, when an uplink control channel (PUCCH) and an uplink shared channel (PUSCH) associated with different transmission/reception points or different control resource set pool indices overlap in a time domain, applies different UE operations in UL transmission, based on at least one of a feedback mode of a transmission confirmation signal (HARQ-ACK) and a content included in uplink control information (UCI) corresponding to the PUCCH, and a transmitting section that transmits at least one of the PUCCH and the PUSCH.

### Advantageous Effects of Invention

According to one aspect of the present disclosure, UL transmission can be appropriately controlled even when UL transmission is performed using a plurality of panels.

### Brief Description of Drawings

[FIG. 1] FIG. 1A and FIG. 1B are diagrams to show examples of single-panel transmission.
[FIG. 2] FIG. 2A to FIG. 2C are diagrams to show examples of multi-panel transmission.
[FIG. 3] FIG. 3A to FIG. 3D are diagrams to show examples of single DCI-based STxMP.
[FIG. 4] FIG. 4A and FIG. 4B are diagrams to show examples of single DCI-based STxMP.
[FIG. 5] FIG. 5A to FIG. 5C are diagrams to show examples of multi-DCI-based STxMP.
[FIG. 6] FIG. 6A and FIG. 6B are diagrams to show examples of UE operations in UL transmission according to a first embodiment.
[FIG. 7] FIG. 7A and FIG. 7B are diagrams to show other examples of UE operations in UL transmission according to the first embodiment.
[FIG. 8] FIG. 8A and FIG. 8B are diagrams to show other examples of UE operations in UL transmission according to the first embodiment.
[FIG. 9] FIG. 9A and FIG. 9B are diagrams to show other examples of UE operations in UL transmission according to the first embodiment.
[FIG. 10] FIG. 10A and FIG. 10B are diagrams to show examples of UE operations in UL transmission according to a third embodiment.
[FIG. 11] FIG. 11A and FIG. 11B are diagrams to show other examples of UE operations in UL transmission according to the third embodiment.
[FIG. 12] FIG. 12A and FIG. 12B are diagrams to show examples of UE operations in UL transmission according to a fourth embodiment.
[FIG. 13] FIG. 13A and FIG. 13B are diagrams to show examples of UE operations in UL transmission according to a fifth embodiment.
[FIG. 14] FIG. 14A and FIG. 14B are diagrams to show examples of UE operations in UL transmission according to a sixth embodiment.
[FIG. 15] FIG. 15 is a diagram to show an example of a schematic structure of a radio communication system according to one embodiment.
[FIG. 16] FIG. 16 is a diagram to show an example of a structure of a base station according to one embodiment.
[FIG. 17] FIG. 17 is a diagram to show an example of a structure of a user terminal according to one embodiment.
[FIG. 18] FIG. 18 is a diagram to show an example of a hardware structure of the base station and the user terminal according to one embodiment.
[FIG. 19] FIG. 19 is a diagram to show an example of a vehicle according to one embodiment.

### Description of Embodiments

### (Single-panel Transmission)

At least one of Transmission Schemes A and B below (single-panel UL transmission schemes A and B) may be applied to single-panel UL transmission or candidates for a single-panel UL transmission scheme. Note that, in the present disclosure, a panel / UE panel may be interpreted as a UE capability value set reported for each UE capability. In the present disclosure, different panels, different spatial relations, different joint TCI states, different TPC parameters, different antenna ports, and the like may be interchangeably interpreted.

### <Transmission Scheme A: Single-panel Single-TRP UL Transmission>

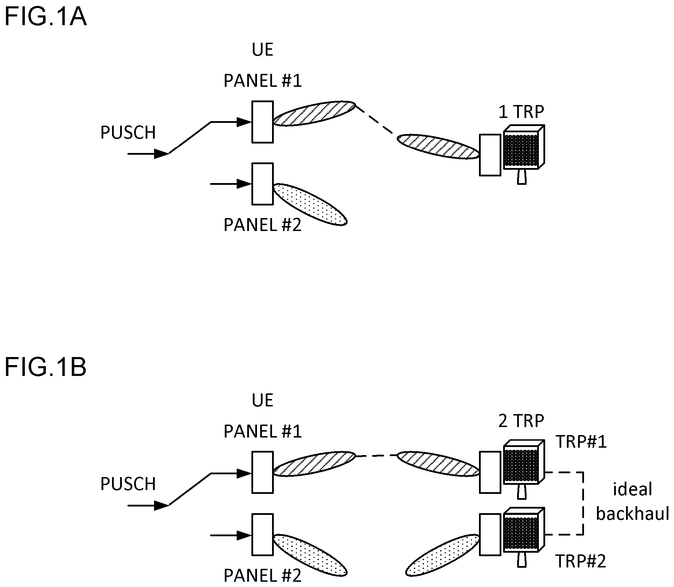

In Rel. 15 and Rel. 16, the UE uses a transmission scheme in which UL is transmitted to one TRP from only one beam and panel at one timing (FIG. 1A).

### <Transmission Scheme B: Single-panel Multi-TRP UL Transmission>

In Rel. 17, it is studied that UL transmission from only one beam and panel is performed at one timing and repetition transmission to a plurality of TRPs is performed (FIG. 1B). In an example in FIG. 1B, the UE transmits a PUSCH to TRP #2 from panel #2 after transmitting a PUSCH to TRP #1 from panel #1 (switching the beam and panel). The two TRPs are connected to each other via an ideal backhaul.

### (Multi-panel Transmission)

For Rel. 18 (or later versions), it is studied that for improvement of UL throughput/reliability, simultaneous UL transmission (for example, simultaneous multi-panel UL transmission (STxMP)) using a plurality of panels is supported for one or more TRPs. A multi-panel UL transmission scheme for a certain UL channel (for example, PUSCH/PUCCH) and the like is also under study.

As multi-panel UL transmission, up to X panels (for example, X = 2) and up to Y panels (for example, Y = 2) may be supported, for example. Note that the values of X and Y are not limited to these. When UL precoding indication for a PUSCH is supported in the multi-panel UL transmission, a codebook for existing systems (for example, Rel. 16 (or earlier versions)) may be supported for multi-panel simultaneous transmission. When single-DCI and multi-DCI based multi-TRP operations are considered, the number of layers and the number of codewords (CWs) may be up to x (for example, x = 4) and up to y (for example, y = 2) in all the panels, respectively. Note that the values of x and y are not limited to these.

For a multi-panel UL transmission scheme or candidates for the multi-panel UL transmission scheme, at least one of schemes 1 to 3 below (multi-panel UL transmission schemes 1 to 3) is under study. Only one of Transmission Schemes 1 to 3 may be supported. A plurality of schemes including at least one of Transmission Schemes 1 to 3 may be supported, and one of the plurality of transmission schemes may be configured for the UE.

### <Transmission Scheme 1: Coherent Multi-panel UL Transmission>

A plurality of panels may be synchronized with each other. All the layers are mapped to all the panels. A plurality of analog beams are indicated. An SRS resource indicator (SRI) field may be enhanced. This scheme may use up to four layers for UL.

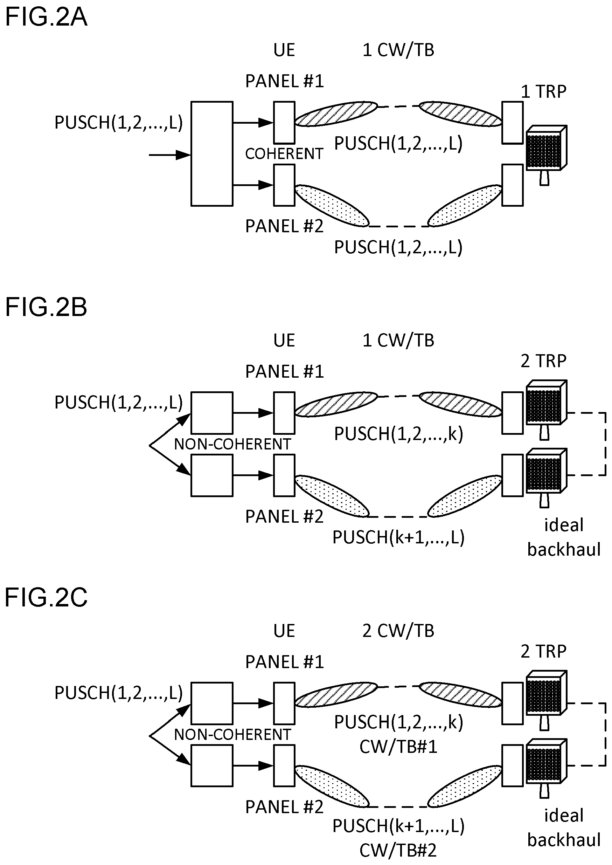

In an example in FIG. 2A, the UE maps one codeword (CW) or one transport block (TB) to L layers (PUSCH (1, 2, ..., L)) to transmit L layers from each of the two panels. Panel #1 and panel #2 are coherent with each other. Transmission scheme 1 can obtain a gain by diversity. A total number of layers in the two panels is 2L. When a maximum value of the total number of layers is 4, a maximum value of the number of layers in one panel is 2.

### <Transmission Scheme 2: Non-coherent Multi-panel UL Transmission with One Codeword (CW) or Transport Block (TB)>

A plurality of panels may not be synchronized with each other. Different layers are mapped to different panels and one CW or TB for PUSCHs from the plurality of panels. Layers corresponding to one CW or TB may be mapped to the plurality of panels. This transmission scheme may use up to four layers or up to eight layers for UL. When up to eight layers are supported, this transmission scheme may support one CW or TB using up to eight layers.

In an example in FIG. 2B, the UE maps 1 CW or 1 TB to k layers (PUSCH (1, 2, ..., k)) and L-k layers (PUSCH (k+1, k+2, ..., L)) to transmit k layers and L-k layers from panel #1 and panel #2, respectively. Transmission scheme 2 can obtain a gain by multiplexing and diversity. A total number of layers in the two panels is L.

### <Transmission Scheme 3: Non-coherent Multi-panel UL Transmission with Two CWs or TBs>

A plurality of panels may not be synchronized with each other. Different layers are mapped to different panels and two CWs or TBs for PUSCHs from the plurality of panels. Layers corresponding to one CW or TB may be mapped to one panel. Layers corresponding to a plurality of CWs or TBs may be mapped to different panels. This transmission scheme may use up to four layers or up to eight layers for UL. When up to eight layers are supported, this transmission scheme may support up to four layers per CW or TB.

In an example in FIG. 2C, the UE maps CW #1 or TB #1 and CW #2 or TB #2 of the 2 CWs or 2 TBs to k layers (PUSCH (1, 2, ..., k)) and L-k layers (PUSCH (k+1, k+2, ..., L)), respectively, to transmit k layers and L-k layers from panel #1 and panel #2, respectively. Transmission scheme 3 can obtain a gain by multiplexing and diversity. A total number of layers in the two panels is L.

In each of the above-described transmission schemes, the base station may configure or indicate panel-specific transmission for UL transmission by using UL TCI or a panel ID. The UL TCI (UL TCI state) may be based on signaling similar to DL beam indication supported in Rel. 15. The panel ID may be implicitly or explicitly applied to transmission of at least one of a target RS resource or target RS resource set, a PUCCH, an SRS, and a PRACH. When the panel ID is explicitly notified, the panel ID may be configured in at least one of a target RS, a target channel, and a reference RS (for example, DL RS resource configuration or spatial relationship information).

### (Simultaneous Multi-Panel Transmission)

In Rel. 18 or later versions, for the above-described one or more transmission schemes/modes, multi-panel UL transmission (for example, simultaneous multi-panel transmission (Simultaneous Transmission across Multiple Panels (STxMP))) for scheduling of a PUSCH based on one DCI (single DCI)/scheduling of a PUSCH based on a plurality of DCIs (multi-DCI) is under study.

For example, in Rel. 18, it is assumed that the following STxMP is supported:
- Single-DCI PUSCH SDM scheme.
- Single-DCI PUSCH SFN scheme.
- Single-DCI PUCCH SFN scheme.
- Multi-DCI overlapping PUSCH+PUSCH scheme.

### <Single DCI-Based STxMP>

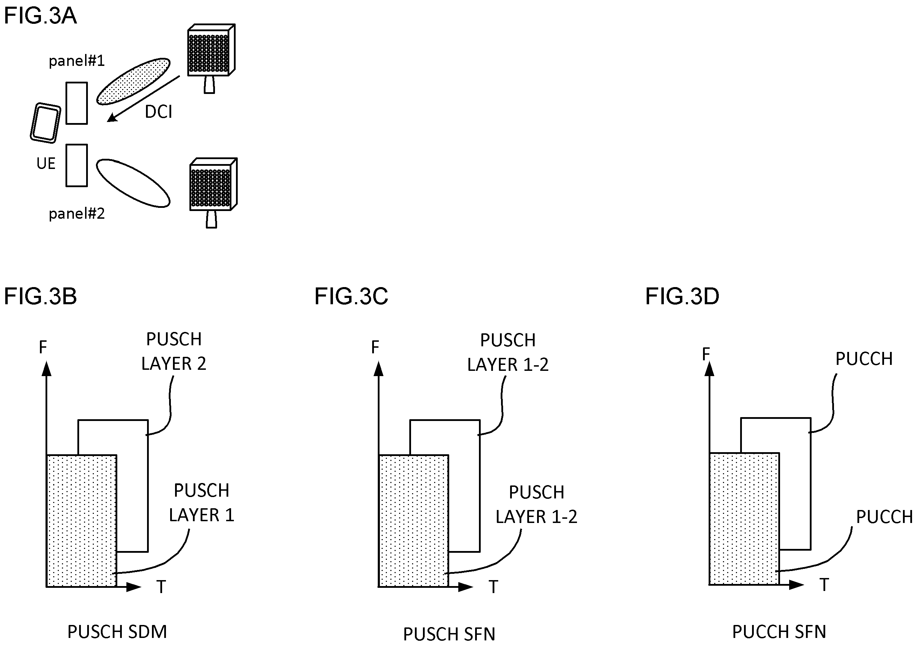

In Rel. 18 or later versions, the UE including a plurality of panels (for example, panel #1 and panel #2) may support simultaneous multi-panel transmission (STxMP) in a single DCI-based multi-TRP system (see FIG. 3A). In single DCI-based STxMP, the following schemes may be applied to UL transmission (for example, PUSCH, PUCCH, or PUSCH+PUCCH).

- Space division multiplexing (SDM) scheme (PUSCH): Different layers/DMRS ports of one PUSCH are separately precoded, and are simultaneously transmitted from different UE panels/beams (see FIG. 3B).
- Single frequency network (SFN)-based transmission scheme (PUSCH): All layers/DMRS ports of one PUSCH are simultaneously transmitted from two different UE panels/beams (see FIG. 3C).
- Single frequency network (SFN)-based transmission scheme (PUCCH): One PUCCH is simultaneously transmitted from a different panel (see FIG. 3D).

FIG. 3B shows an example of a case in which the single DCI-based PUSCH SDM scheme is applied. The UE may assume that PUSCH repetition transmissions to which SDM is applied are scheduled in the same time resource and the same frequency resource. In other words, when a plurality of coherent panels are used, the UE may transmit PUSCH repetition transmissions to which SDM is applied in the same time resource and the same frequency resource. FIG. 3B shows a case in which the time and frequency resources of layer #1 and layer #2 corresponding to the PUSCH are the same.

FIG. 3B may be applied to a case in which SDM is applied to one CW (or TB), or may be applied to a case in which SDM is applied to two CWs (or TBs). When SDM is applied to two CWs, two CWs simultaneously transmitted from two different panels are spatially multiplexed.

FIG. 3C shows an example of a case in which the single DCI-based PUSCH SFN-based transmission scheme (for example, the SFN-based transmission scheme) is applied. In the SFN, the UE transmits the same signal from respective panels corresponding to different TCI states (for example, joint/UL TCI states) to the same RE. Here, all layers (for example, layers #1 to #2)/DMRS ports of one PUSCH are simultaneously transmitted from two different UE panels (for example, panel #1 and panel #2).

FIG. 3D shows an example of a case in which the single DCI-based PUCCH SFN-based transmission scheme (for example, the SFN-based transmission scheme) is applied. Here, one PUCCH is simultaneously transmitted from different panels (for example, panel #1 and panel #2).

In the single DCI-based PUSCH SDM scheme/SFN scheme, a plurality of (for example, two) SRS resource sets may be configured, and a plurality of (for example, two) SRI fields/TPMI fields may be indicated.

In the single DCI-based PUCCH SFN scheme, a plurality of (for example, two) TCI states may be applied to one PUCCH resource.

### <Multi-DCI-Based STxMP>

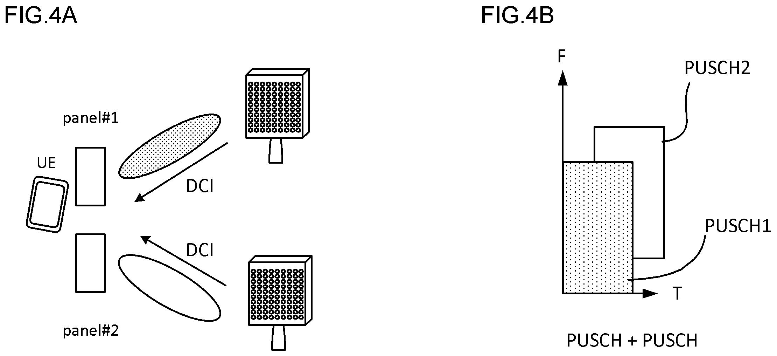

In Rel. 18 or later versions, the UE including a plurality of panels (for example, panel #1 and panel #2) may support simultaneous multi-panel transmission (STxMP) in a multi-DCI-based multi-TRP system (see FIG. 4A). In multi-DCI-based STxMP, UL channel/UL signal simultaneous transmission (for example, PUSCH+PUSCH) may be supported (see FIG. 4B). For example, two PUSCHs overlapping in the time domain are associated with different TRPs, and are simultaneously transmitted from different UE panels/beams.

The UE may simultaneously transmit two independent PUSCHs associated with different TRPs in the same active BWP. The total number of layers corresponding to the two independent PUSCHs may be defined as up to X (or X or less). X may be 4, for example, or may be another value. The maximum number of layers of each of the two PUSCHs may be X/2 (for example, 2), or may be another value. The two independent PUSCHs may be associated with different CORESET pool indices.

In the multi-DCI-based PUSCH+PUSCH, a plurality of (for example, two) SRS resource sets may be configured, and the two SRS resource sets may be respectively associated with (for example, two) different CORESET pool indices.

In Rel. 18, as multi-DCI-based STxMP, simultaneous transmission of PUSCHs (for example, the PUSCH+PUSCH scheme) is supported. Further, in Rel. 19 or later versions, as multi-DCI-based STxMP, it is also assumed that simultaneous transmission (for example, STxMP PUCCH+PUCCH, STxMP PUCCH+PUSCH) including an uplink control channel (for example, a PUCCH) is supported.

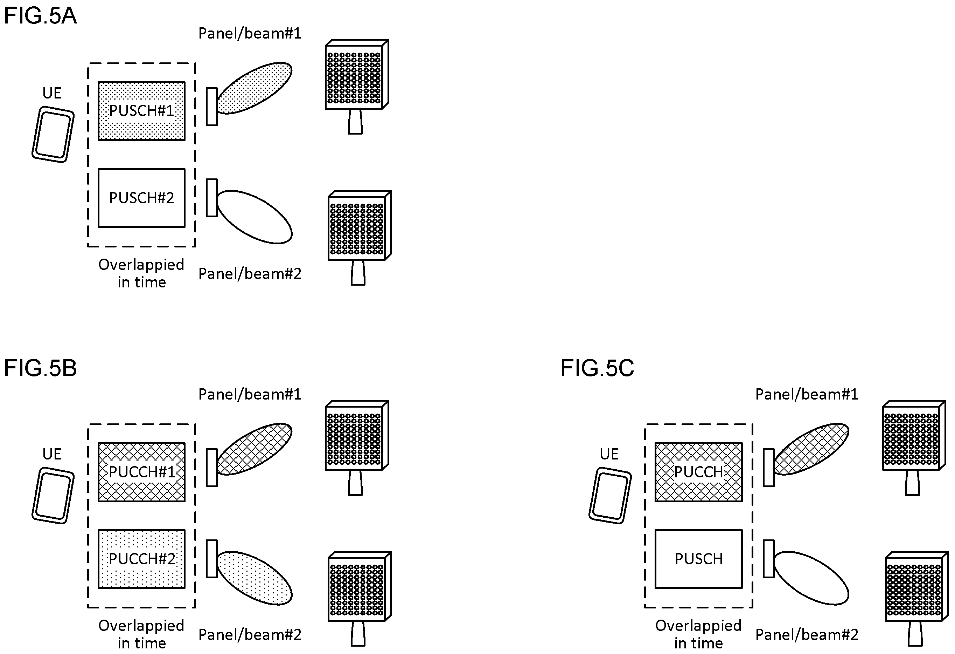

FIG. 5A shows an example of multi-DCI-based STxMP PUSCH+PUSCH, FIG. 5B shows an example of multi-DCI-based STxMP PUCCH+PUCCH, and FIG. 5C shows an example of multi-DCI-based STxMP PUCCH+PUSCH.

In the STxMP PUSCH+PUSCH (see FIG. 5A), two PUSCHs are associated with different TRPs, and are simultaneously transmitted from the UE panels. The two PUSCHs may be partially/fully overlapping in the time domain (partially/fully overlapping in time domain), or may be partially/fully/non overlapping in the frequency domain (partially/fully/non overlapping in frequency domain). The TRP may be interpreted as a panel, a CORESET pool index, an SRS resource set, an SSB group, a CSI-RS group, a TCI state, or a group of TCI states.

In the STxMP PUCCH+PUCCH (see FIG. 5B), two PUCCHs are associated with different TRPs, and are simultaneously transmitted from the UE panels. The two PUCCHs may be partially/fully overlapping in the time domain (partially/fully overlapping in time domain), or may be partially/fully/non overlapping in the frequency domain (partially/fully/non overlapping in frequency domain).

In the STxMP PUCCH+PUSCH (see FIG. 5C), one PUCCH and one PUSCH are associated with different TRPs, and are simultaneously transmitted from the UE panels. The one PUCCH and the one PUSCH may be partially/fully overlapping in the time domain (partially/fully overlapping in time domain), or may be partially/fully/non overlapping in the frequency domain (partially/fully/non overlapping in frequency domain).

In Rel. 17 or earlier versions (for example, the STxMP PUCCH+PUCCH of FIG. 5B and the STxMP PUCCH+PUSCH of FIG. 5C are not supported), UE operation for solving an overlap between a PUCCH and another UL channel/UL signal (for example, PUCCHs, a PUCCH and a PUSCH) is supported.

For example, when a PUCCH and another UL channel/signal overlap, the UE multiplexes UCI of a plurality of PUCCH transmissions to one PUCCH resource, multiplexes UCI of PUCCH transmission to PUSCH transmission, or drops PUCCH/PUSCH transmission. The UL channel to which the UCI is multiplexed/UL channel to be dropped may be determined based on a certain criterion (for example, a UCI type, a priority index of the PUCCH/PUSCH, or the like).

When a PUCCH and another UL channel/signal overlap, in the UE operation of existing systems (for example, Rel. 17 or earlier versions), the overlap of the UL channel/signals is resolved and then only one PUCCH or PUSCH is transmitted at once.

In future radio communication systems, when the STxMP PUCCH+PUCCH/STxMP PUCCH+PUSCH is supported, it is also assumed that the UE operation of overlapping transmission of the PUCCHs and overlapping transmission of the PUCCH and the PUSCH is supported/enhanced.

However, in multi-DCI-based STxMP, when overlapping transmission of a PUCCH and a UL channel/signal is supported, how to perform UE operation is not sufficiently studied. When the UE operation is not appropriately performed, it is considered that communication quality may deteriorate.

In view of this, the inventors of the present invention focused on a case in which a PUCCH is supported as multi-DCI-based STxMP, studied UE operation in such a case, and came up with the idea of the present embodiment. Note that the present embodiment may be applied not only to STxMP with a PUCCH.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, notify, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, other messages (for example, a message from the core network, such as positioning protocol (for example, NR Positioning Protocol A (NRPPa)/LTE Positioning Protocol (LPP)) messages), and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information", "one or a plurality of pieces of spatial relation information", and the like. The TCI state and the TCI may be interchangeably interpreted.

A panel Identifier (ID) and a panel may be interchangeably interpreted. In other words, a TRP ID and a TRP, a CORESET group ID and a CORESET group, and the like may be interchangeably interpreted.

In the present disclosure, a TRP, a transmission point, a panel, a DMRS port group, a CORESET pool, and one of two TCI states associated with one code point of a TCI field may be interchangeably interpreted.

In the present disclosure, transmission/reception of a channel/signal using a single TRP may be interpreted as TCI states (joint/separate/indicated TCI states) being equal in the transmission/reception (for example, NCJT/CJT/repetition) of the channel/signal, or the number of TCI states (joint/separate/indicated TCI states) being one in the transmission/reception (for example, NCJT/CJT/repetition) of the channel/signal.

Transmission/reception of a channel/signal using a single TRP may be interpreted as TCI states (joint/separate/indicated TCI states) being different in the transmission/reception (for example, NCJT/CJT/repetition) of the channel/signal, or the number of different TCI states (joint/separate/indicated TCI states) being plural (for example, two) in the transmission/reception (for example, NCJT/CJT/repetition) of the channel/signal.

In the present disclosure, a single TRP, a single-TRP system, single-TRP transmission, and a single PDSCH may be interchangeably interpreted. In the present disclosure, a multi-TRP (a plurality of TRPs), a multi-TRP system, multi-TRP transmission, and a multi-PDSCH may be interchangeably interpreted.

In the present disclosure, single DCI, a single PDCCH, a multi-TRP based on single DCI, two TCI states on at least one TCI code point being activated, at least one code point of a TCI field being mapped to two TCI states, and a specific index (for example, a TRP index, a CORESET pool index, or an index corresponding to a TRP) being configured for a specific channel/CORESET may be interchangeably interpreted.

In the present disclosure, a single TRP, a channel using a single TRP, a channel using one TCI state / spatial relation, multi-TRP being not enabled by RRC/DCI, a plurality of TCI states / spatial relations being not enabled by RRC/DCI, and one CORESET pool index (CORESETPoolIndex) value being not configured for any CORESET and any codepoint of a TCI field being not mapped to two TCI states may be interchangeably interpreted.

In the present disclosure, multi-TRP, a channel/signal using multi-TRP, a channel using a plurality of TCI states / spatial relations, multi-TRP being enabled by RRC/DCI, a plurality of TCI states / spatial relations being enabled by RRC/DCI, and at least one of multi-TRP based on single DCI and multi-TRP based on multi-DCI may be interchangeably interpreted.

In the present disclosure, a multi-TRP based on multi-DCI, one CORESET pool index (CORESETPoolIndex) value being configured for a CORESET, and a plurality of specific indices (for example, TRP indices, CORESET pool indices, or indices corresponding to TRPs) being configured for a specific channel/CORESET may be interchangeably interpreted.

In the present disclosure, TRP #1 (first TRP) may correspond to CORESET pool index = 0, or may correspond to a first TCI state out of two TCI states corresponding to one code point of a TCI field. TRP #2 (second TRP) may correspond to CORESET pool index = 1, or may correspond to a second TCI state out of two TCI states corresponding to one code point of a TCI field.

In the present disclosure, single DCI (sDCI), a single PDCCH, a multi-TRP system based on single DCI, sDCI-based MTRP, and two TCI states in at least one TCI codepoint being activated may be interchangeably interpreted.

In the present disclosure, multi-DCI (mDCI), multi-PDCCH, a multi-TRP system based on multi-DCI, mDCI-based MTRP, and two CORESET pool indices or CORESET pool index = 1 (or a value equal to one or greater) being configured may be interchangeably interpreted.

In the present disclosure, beam indication DCI, a beam indication MAC CE, and beam indication DCI/MAC CE may be interchangeably interpreted. In other words, indication related to an indicated TCI state to the UE may be performed using at least one of DCI and a MAC CE.

In the present disclosure, a channel, a signal, and a channel/signal may be interchangeably interpreted. In the present disclosure, a DL channel, a DL signal, a DL signal/channel, transmission/reception of a DL signal/channel, DL reception, and DL transmission may be interchangeably interpreted. In the present disclosure, a UL channel, a UL signal, a UL signal/channel, transmission/reception of a UL signal/channel, UL reception, and UL transmission may be interchangeably interpreted.

In the present disclosure, applying a TCI state/QCL assumption to each channel/signal/resource may mean applying a TCI state/QCL assumption to transmission and reception of each channel/signal/resource.

In the present disclosure, a first TCI state (first indicated TCI state) may correspond to the first TRP. In the present disclosure, a second TCI state (second indicated TCI state) may correspond to the second TRP. In the present disclosure, an n-th TCI state (n-th indicated TCI state) may correspond to an n-th TRP.

In the present disclosure, a value (for example, 0) of a first CORESET pool index, a value (for example, 1) of a first TRP index, and the first TCI state (first DL/UL (joint/separate) TCI state) may correspond to each other. In the present disclosure, a value (for example, 1) of a second CORESET pool index, a value (for example, 2) of a second TRP index, and the second TCI state (second DL/UL (joint/separate) TCI state) may correspond to each other.

Note that, although each embodiment of the present disclosure below will mainly describe a method for two TRPs (i.e., a case in which at least one of N and M is 2) for application of a plurality of TCI states in transmission and reception using a plurality of TRPs, the number of TRPs may be 3 or more (a plurality of TRPs), and each embodiment may be applied to support the number of TRPs. In other words, at least one of N and M may be a number greater than 2.

### (Radio Communication Method)

Although the following will give description by taking an example of a multi-DCI-based multi-TRP, application of the present embodiment is not limited to this. It may be applied to a case in which UL channels/signals overlap in the time domain.

When the multi-DCI-based multi-TRP is configured/applied, for the UE, the CORESET pool index may not be provided for a first CORESET of an active DL BWP of a serving cell, or the CORESET pool index of the first value (for example, 0) may be applied and the CORESET pool index of the second value (for example, 1) may be applied to a second CORESET of the active DL BWP of the serving cell.

In the present disclosure, for the TRP/panel, the CORESET pool index, the SRS resource set, the SSB group, the CSI-RS group, the TCI state, or the TCI state group may be referred to.

Although the following will give description by taking an example of a case in which two TRPs are configured in one cell/CC (or a case in which two TRPs are associated with one cell/CC), cases to which the present embodiment is applicable are not limited to this. The number of TRPs may be 3 or more. It may be applied to a case in which two TRPs respectively corresponding to different cells are configured (or a case in which TRPs are respectively associated with a plurality of (for example, two) cells/CCs).

### <First Embodiment>

A first embodiment relates to an example of UE operation when STxMP including at least an uplink control channel (for example, a PUCCH) is supported. In the first embodiment, UL channels to which simultaneous transmission is applied may have the same priority (for example, priority index), or may have different priorities.

When STxMP using the PUCCH (for example, STxMP PUCCH+PUCCH/STxMP PUCCH+PUSCH) is configured/supported/applied, different UE operations may be configured/supported/applied based on a certain condition. In the following description, "configure", "support", and "apply" may be interchangeably interpreted. The certain condition may be at least one of a feedback mode of a transmission confirmation signal (for example, a HARQ-ACK or an ACK/NACK) (condition 1-1) and a content included in UCI (for example, whether or not a HARQ-ACK is included in the UCI) (condition 1-2), for example.

### {STxMP PUCCH+PUCCH}

When two PUCCH transmissions associated with two different TRPs/two different UE panels overlap in the time domain, and the UE supports the STxMP PUCCH+PUCCH/the STxMP PUCCH+PUCCH is configured (or enabled) for the UE by a higher layer parameter, different UE operations may be applied based on the certain condition (for example, condition 1-1/condition 1-2).

When the STxMP PUCCH+PUCCH is configured, the CORESET pool indices/TRP indices/panel indices may be respectively associated with the PUCCHs (or PUCCH resources). For example, each PUCCH resource configured for the UE may be associated with one of the first CORESET pool index/TRP index/panel index and the second CORESET pool index/TRP index/panel index.

In other words, one of a first PUCCH resource and a second PUCCH resource configured for the UE may be associated with the first CORESET pool index/TRP index/panel index, and the other may be associated with the second CORESET pool index/TRP index/panel index. In the present disclosure, a PUCCH and a PUCCH resource may be interchangeably interpreted.

### <<Condition 1-1>>

For PUCCH simultaneous transmission, separate UE operations may be applied based on the feedback mode of the transmission confirmation signal. The feedback mode of the transmission confirmation signal may be configured for the UE by a higher layer parameter (for example, ackNackFeedbackMode). For example, separate (or different) UE operations may be applied for a case in which a first feedback mode (for example, joint, or ackNackFeedbackMode = joint) is provided and a case in which a second feedback mode (for example, separate, or ackNackFeedbackMode = separate) is provided.

The UE may apply first UE operation when the first feedback mode is configured, and apply second UE operation when the second feedback mode is configured.

### {{First UE Operation}}

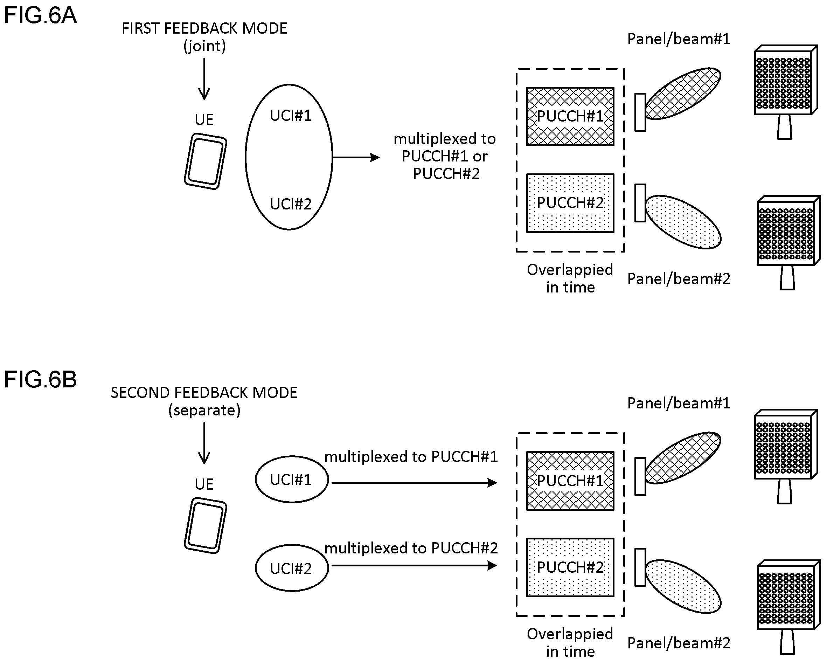

When the first feedback mode (for example, joint) is provided/configured for the UE, the UCIs of two PUCCHs (or PUCCH resources) associated with different TRPs/panels/CORESET pool indices may be multiplexed and transmitted to one PUCCH (or PUCCH resource) (see FIG. 6A).

FIG. 6A shows a case in which PUCCH #1 and PUCCH #2 are associated with different TRPs/panels/CORESET pool indices, and UCI #1 corresponding to PUCCH #1 and UCI #2 corresponding to PUCCH #2 are multiplexed and transmitted to a specific PUCCH (for example, PUCCH #1 or PUCCH #2).

The specific PUCCH (or PUCCH resource) to which the UCIs are multiplexed/transmitted may be determined based on a certain rule. The certain rule may be a UCI type/priority index/panel index/TRP index. Alternatively, as the certain rule, a rule supported in Rel. 18 may be used.

In this manner, when the feedback mode is configured to "joint", the UE may transmit the UCIs (for example, the HARQ-ACKs) respectively associated with different TRPs/panels/CORESET pool indices on the specific PUCCH. It is assumed that the joint HARQ-ACK is suitably applied in an ideal backhaul case (for example, an ideal backhaul case). Thus, when the feedback mode is "joint", the UCIs may be multiplexed and transmitted to the PUCCH corresponding to any one of the TRPs/panels.

In the first UE operation, the PUCCH to which the UCIs are not multiplexed may be transmitted, or may be controlled to be not transmitted (for example, to be dropped). When the UCIs are transmitted only on one PUCCH (for example, another PUCCH is dropped, or a part (for example, an overlapping part) of another PUCCH is dropped), transmission power of PUCCH transmission can be increased, as compared to when PUCCH simultaneous transmission (two PUCCH transmissions) is performed.

Alternatively, the HARQ-ACKs corresponding to two PUCCHs may be multiplexed to the specific PUCCH, and the remaining UCI (for example, CSI) other than the HARQ-ACK corresponding to another PUCCH may be multiplexed and transmitted to the another PUCCH.

### {{Second UE Operation}}

When the second feedback mode (for example, separate) is provided/configured for the UE, instead of the UCIs of two PUCCHs (or PUCCH resources) associated with different TRPs/panels/CORESET pool indices being multiplexed to one PUCCH (or PUCCH resource), two PUCCH resources may be transmitted simultaneously (or in the overlapping time domain) (see FIG. 6B).

FIG. 6B shows a case in which PUCCH #1 and PUCCH #2 are associated with different TRPs/panels/CORESET pool indices, and PUCCH #1 including UCI #1 and PUCCH #2 including UCI #2 are simultaneously transmitted.

For example, the UCI corresponding to the first TRP/panel/CORESET pool index may be transmitted on the PUCCH corresponding to the first TRP/panel/first CORESET pool index, and the UCI corresponding to the second TRP/panel/second CORESET pool index may be transmitted on the PUCCH corresponding to the second TRP/panel/second CORESET pool index.

It is assumed that the separate HARQ-ACK is suitably applied in a non-ideal backhaul case (for example, a non-ideal backhaul case). Thus, it is preferable that the UCIs be transmitted on corresponding PUCCHs (or respectively transmitted on two simultaneously transmitted PUCCHs). Owing to the second UE operation, the UCIs can be respectively directly fed back to corresponding TRPs. Note that, in an ideal backhaul case, the second UE operation may be applied.

### <<Condition 1-2>>

For PUCCH simultaneous transmission, separate UE operations may be applied based on the content included in the UCI. The content included in the UCI may be whether or not the HARQ-ACK is included in the UCI. For example, separate (or different) UE operations may be applied for a case in which the HARQ-ACK is included in the UCI and a case in which the HARQ-ACK is not included in the UCI.

The UE may apply the first UE operation when the HARQ-ACK is not included in the UCI, and apply the second UE operation when the HARQ-ACK is included in the UCI.

The case in which the HARQ-ACK is not included in the UCI may mean a case in which the HARQ-ACK is not included in all of the UCIs respectively corresponding to the PUCCHs. The case in which the HARQ-ACK is included in the UCI may mean a case in which the HARQ-ACK is included in at least one of the UCIs respectively corresponding to the PUCCHs.

### {{First UE Operation}}

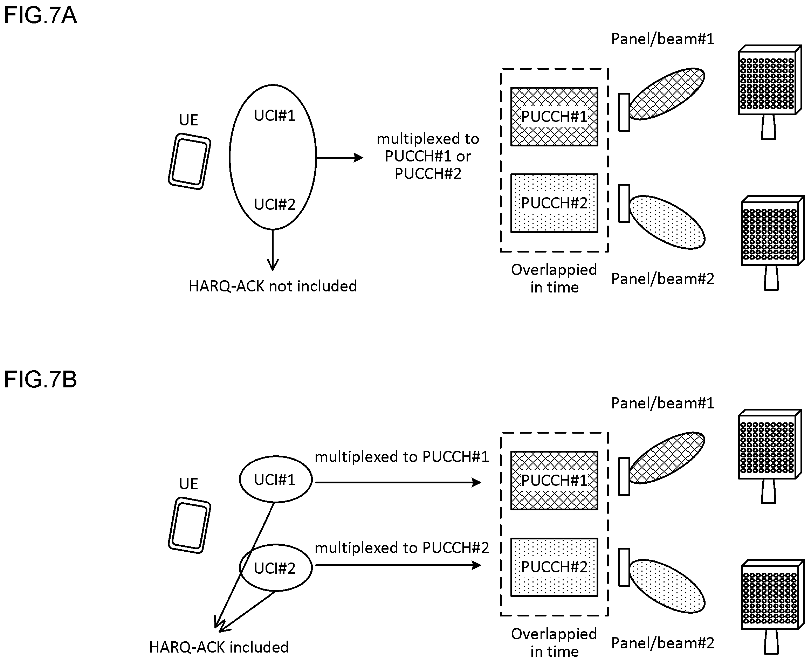

When the HARQ-ACK is not included in the UCI, the UCIs of two PUCCHs (or PUCCH resources) associated with different TRPs/panels/CORESET pool indices may be multiplexed and transmitted to one PUCCH (or PUCCH resource) (see FIG. 7A).

FIG. 7A shows a case in which PUCCH #1 and PUCCH #2 are associated with different TRPs/panels/CORESET pool indices, and UCI #1 corresponding to PUCCH #1 and UCI #2 corresponding to PUCCH #2 are multiplexed and transmitted to a specific PUCCH (for example, PUCCH #1 or PUCCH #2).

The PUCCH resource to which the UCIs are multiplexed/transmitted may be determined based on a certain rule. The certain rule may be a UCI type/priority index/panel index/TRP index. Alternatively, as the certain rule, a rule supported in Rel. 18 may be used.

In this manner, when the HARQ-ACK is not included in the UCIs (for example, UCI #1 and UCI #2 in FIG. 7A), the UE may transmit the UCIs (for example, the HARQ-ACKs) respectively associated with different TRPs/panels/CORESET pool indices on the specific PUCCH.

In the first UE operation, the PUCCH to which the UCIs are not multiplexed may be transmitted, or may be controlled to be not transmitted (for example, to be dropped). When the UCIs are transmitted only on one PUCCH (for example, another PUCCH is dropped, or a part (for example, an overlapping part) of another PUCCH is dropped), transmission power of PUCCH transmission can be increased, as compared to when PUCCH simultaneous transmission (two PUCCH transmissions) is performed.

### {{Second UE Operation}}

When the HARQ-ACK is included in the UCI, instead of the UCIs of two PUCCHs (or PUCCH resources) associated with different TRPs/panels/CORESET pool indices being multiplexed to one PUCCH (or PUCCH resource), two PUCCH resources may be transmitted simultaneously (or in the overlapping time domain) (see FIG. 7B).

FIG. 7B shows a case in which PUCCH #1 and PUCCH #2 are associated with different TRPs/panels/CORESET pool indices, and PUCCH #1 including UCI #1 and PUCCH #2 including UCI #2 are simultaneously transmitted. FIG. 7B shows a case in which the HARQ-ACKs are included in both of UCI #1 corresponding to PUCCH #1 and UCI #2 corresponding to PUCCH #2.

For example, the UCI corresponding to the first TRP/panel/CORESET pool index may be transmitted on the PUCCH corresponding to the first TRP/panel/CORESET pool index, and the UCI corresponding to the second TRP/panel/CORESET pool index may be transmitted on the PUCCH corresponding to the second TRP/panel/CORESET pool index.

Because HARQ-ACK information is specific to a TRP, when the HARQ-ACK is included in the UCI, it is desirable that the HARQ-ACK be fed back to a target TRP (or a corresponding TRP) at least in a non-ideal backhaul case (for example, a non-ideal backhaul case). Owing to the second UE operation, the HARQ-ACKs (or the UCI including the HARQ-ACKs) can be respectively directly fed back to corresponding TRPs.

On the other hand, to which TRP other UCI (for example, CSI/SR or the like), compared to the HARQ-ACK, is transmitted is not a significant problem, and thus the UCI not including the HARQ-ACK may be multiplexed and transmitted to the PUCCH corresponding to any one of the TRPs/panels. This enables UCI transmission using one PUCCH resource.

Condition 1-1 and condition 1-2 may be separately considered, only one of them may be considered, or they may be considered in combination. For example, different UE operations may be applied when both of condition 1-1 and condition 1-2 are satisfied, or different UE operations may be applied when at least one of condition 1-1 and condition 1-2 is satisfied.

As an example, the first UE operation may be applied when the first feedback mode (for example, joint) is provided/configured for the UE or when the HARQ-ACK is not included in the UCI. The second UE operation may be applied when the second feedback mode (for example, separate) is provided/configured for the UE and the HARQ-ACK is included in the UCI.

### - Variations

Although the above description has shown the cases in which the first UE operation is applied when the HARQ-ACK is not included in either of UCI #1 or UCI #2 (see FIG. 7A) and the second UE operation is applied when the HARQ-ACK is included in both of UCI #1 and UCI #2 (see FIG. 7B), these are not restrictive.

For example, the first UE operation or the second UE operation may be applied when the HARQ-ACK is included in one of UCI #1 and UCI #2 and the HARQ-ACK is not included in the other. For example, when the first UE operation is applied, UCI #1 and UCI #2 may be multiplexed and transmitted to the PUCCH corresponding to the UCI including the HARQ-ACK. Consequently, even when two UCIs are multiplexed to a specific PUCCH, the HARQ-ACKs can be directly fed back to corresponding TRPs.

Which of the first UE operation and the second UE operation is applied when the HARQ-ACK is included in one of UCI #1 and UCI #2 and the HARQ-ACK is not included in the other may be defined in a specification, may be configured from the base station to the UE, or may be autonomously selected by the UE.

### {STxMP PUCCH+PUSCH}

When PUCCH transmission and PUSCH transmission associated with two different TRPs/two different UE panels overlap in the time domain, and the UE supports the STxMP PUCCH+PUSCH/the STxMP PUCCH+PUSCH is configured (or enabled) by a higher layer parameter, different UE operations may be supported/applied based on the certain condition (for example, condition 1-1/condition 1-2).

When the STxMP PUCCH+PUSCH is configured, the CORESET pool indices/TRP indices/panel indices may be respectively associated with the PUCCH (or PUCCH resource) and the PUSCH. For example, the PUCCH and the PUSCH may be associated with one of the first CORESET pool index/TRP index/panel index and the second CORESET pool index/TRP index/panel index.

In other words, one of the PUCCH and the PUSCH may be associated with the first CORESET pool index/TRP index/panel index, and the other may be associated with the second CORESET pool index/TRP index/panel index.

### <<Condition 1-1>>

For PUCCH+PUSCH simultaneous transmission, separate UE operations may be applied based on the feedback mode of the transmission confirmation signal. The feedback mode of the transmission confirmation signal may be configured for the UE by a higher layer parameter (for example, ackNackFeedbackMode). For example, separate (or different) UE operations may be applied for a case in which a first feedback mode (for example, joint, or ackNackFeedbackMode = joint) is provided and a case in which a second feedback mode (for example, separate, or ackNackFeedbackMode = separate) is provided.

The UE may apply first UE operation when the first feedback mode is configured, and apply second UE operation when the second feedback mode is configured.

### {{First UE Operation}}

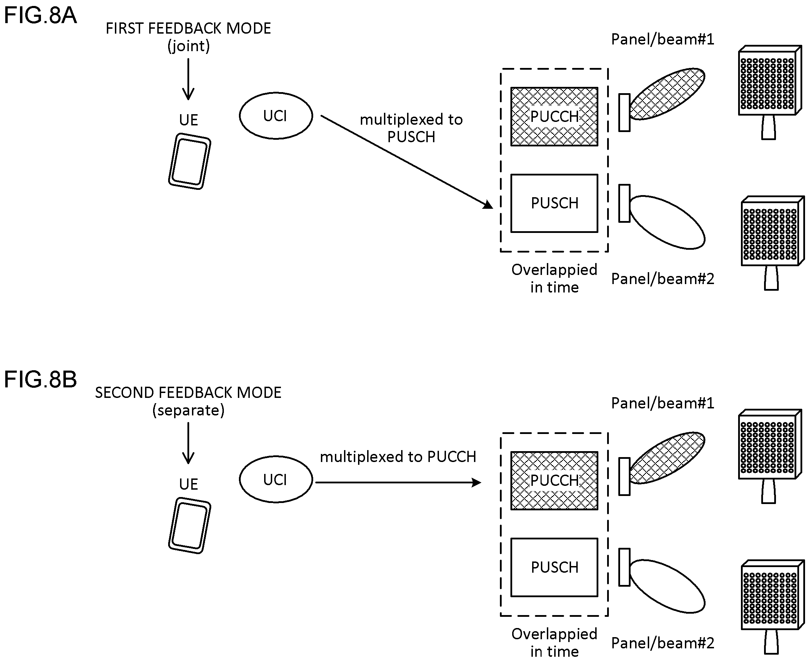

When the first feedback mode (for example, joint) is provided/configured for the UE, the UCI of the PUCCH being multiplexed (and transmitted) to the PUSCH associated with a TRP/panel/CORESET pool index different from that of the PUCCH may be supported/permitted (see FIG. 8A).

FIG. 8A shows a case in which the PUCCH and the PUSCH are associated with different TRPs/panels/CORESET pool indices, and the UCI corresponding to the PUCCH is multiplexed and transmitted to the PUSCH.

In this manner, when the feedback mode is configured to "joint", the UE may transmit the UCI (for example, the HARQ-ACK) corresponding to the PUCCH on the PUSCH. It is assumed that the joint HARQ-ACK is suitably applied in an ideal backhaul case (for example, an ideal backhaul case). Thus, when the feedback mode is "joint", the UCI may be multiplexed and transmitted to the PUSCH (for example, the PUSCH corresponding to a TRP different from the TRP of the PUCCH).

In the first UE operation, the PUCCH to which the UCIs are not multiplexed may be transmitted, or may be controlled to be not transmitted (for example, to be dropped). When the UCI is transmitted on the PUSCH (for example, the PUCCH is dropped, or a part (for example, an overlapping part) of the PUCCH is dropped), transmission power of PUSCH transmission can be increased, as compared to when PUCCH+PUSCH simultaneous transmission is performed.

Alternatively, when a plurality of UCI types (HARQ-ACKs/SRs/CSI-RSs) are included in the UCI of the PUCCH, a part of the UCI types may be multiplexed to the PUSCH, and the rest of the UCI types may be multiplexed and transmitted to the PUCCH.

### {{Second UE Operation}}

When the second feedback mode (for example, separate) is provided/configured for the UE, instead of the UCI of the PUCCH being multiplexed to the PUSCH associated with a TRP/panel different from that of the PUCCH, the PUCCH and the PUSCH may be transmitted simultaneously (or in the overlapping time domain) (see FIG. 8B).

FIG. 8B shows a case in which the PUCCH and the PUSCH are associated with different TRPs/panels/CORESET pool indices, and the PUCCH including the UCI and the PUSCH are simultaneously transmitted.

For example, the UCI corresponding to the first TRP/panel/CORESET pool index may be multiplexed and transmitted to the PUCCH corresponding to the first TRP/panel/first CORESET pool index, and the PUCCH and the PUSCH corresponding to the second TRP/panel/second CORESET pool index may be simultaneously transmitted.

It is assumed that the separate HARQ-ACK is suitably applied in a non-ideal backhaul case (for example, a non-ideal backhaul case). Thus, it is preferable that the UCI be transmitted on a corresponding PUCCH (or transmission on the PUSCH corresponding to a TRP different from the TRP of the PUCCH be not performed). Owing to the second UE operation, the UCI can be directly fed back to a corresponding TRP. Note that, in an ideal backhaul case, the second UE operation may be applied.

### <<Condition 1-2>>

For PUCCH+PUSCH simultaneous transmission, separate UE operations may be applied based on the content included in the UCI. The content included in the UCI may be whether or not the HARQ-ACK is included in the UCI, for example. For example, separate (or different) UE operations may be applied for a case in which the HARQ-ACK is included in the UCI and a case in which the HARQ-ACK is not included in the UCI.

The UE may apply the first UE operation when the HARQ-ACK is not included in the UCI, and apply the second UE operation when the HARQ-ACK is included in the UCI.

### {{First UE Operation}}

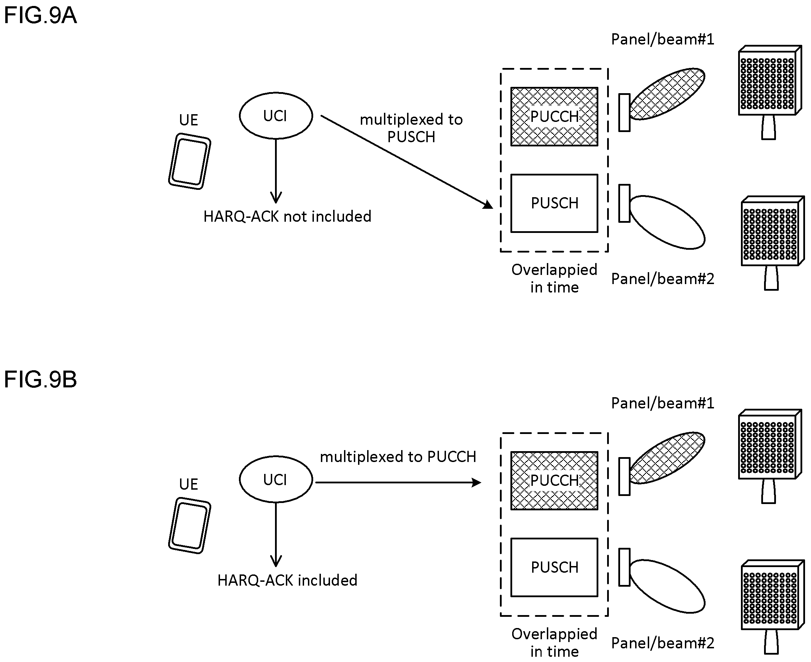

When the HARQ-ACK is not included in the UCI, the UCI of the PUCCH being multiplexed (and transmitted) to the PUSCH associated with a TRP/panel/CORESET pool index different from that of the PUCCH may be supported/permitted (see FIG. 9A).

FIG. 9A shows a case in which the PUCCH and the PUSCH are associated with different TRPs/panels/CORESET pool indices, and the UCI corresponding to the PUCCH is multiplexed and transmitted to the PUSCH.

In the first UE operation, the PUCCH to which the UCIs are not multiplexed may be transmitted, or may be controlled to be not transmitted (for example, to be dropped). When the UCI is transmitted on the PUSCH (for example, the PUCCH is dropped, or a part (for example, an overlapping part) of the PUCCH is dropped), transmission power of PUSCH transmission can be increased, as compared to when PUCCH+PUSCH simultaneous transmission is performed.

### {{Second UE Operation}}

When the HARQ-ACK is included in the UCI, instead of the UCI of the PUCCH being multiplexed to the PUSCH associated with a TRP/panel/CORESET pool index different from that of the PUCCH, the PUCCH and the PUSCH may be transmitted simultaneously (or in the overlapping time domain).

For example, the UCI corresponding to the first TRP/panel/CORESET pool index may be transmitted on the PUCCH corresponding to the first TRP/panel/CORESET pool index, and the PUCCH and the PUSCH corresponding to the second TRP/panel/second CORESET pool index may be simultaneously transmitted (see FIG. 9B).

FIG. 9B shows a case in which the PUCCH and the PUSCH are associated with different TRPs/panels/CORESET pool indices, and the PUCCH including the UCI and the PUSCH are simultaneously transmitted.

Because HARQ-ACK information is specific to a TRP, when the HARQ-ACK is included in the UCI, it is desirable that the HARQ-ACK be fed back to a target TRP (or a corresponding TRP) at least in a non-ideal backhaul case (for example, a non-ideal backhaul case). Owing to the second UE operation, the HARQ-ACKs (or the UCI including the HARQ-ACKs) can be respectively directly fed back to corresponding TRPs.

On the other hand, to which TRP other UCI (for example, CSI/SR or the like), compared to the HARQ-ACK, is transmitted is not a significant problem, and thus the UCI not including the HARQ-ACK may be multiplexed and transmitted to the PUSCH corresponding to a TRP different from the TRP of the PUCCH.

Condition 1-1 and condition 1-2 may be separately considered, only one of them may be considered, or they may be considered in combination. For example, different UE operations may be applied when both of condition 1-1 and condition 1-2 are satisfied, or different UE operations may be applied when at least one of condition 1-1 and condition 1-2 is satisfied.

As an example, the first UE operation may be applied when the first feedback mode (for example, joint) is provided/configured for the UE or when the HARQ-ACK is not included in the UCI. The second UE operation may be applied when the second feedback mode (for example, separate) is provided/configured for the UE and the HARQ-ACK is included in the UCI.

### <Second Embodiment>

A second embodiment relates to another example of UE operation when STxMP including at least an uplink control channel (for example, a PUCCH) is supported. In the second embodiment, UL channels to which simultaneous transmission is applied may have the same priority (for example, priority index), or may have different priorities. The second embodiment may be employed individually, or may be employed in combination with another embodiment.

When STxMP using the PUCCH (for example, STxMP PUCCH+PUCCH/STxMP PUCCH+PUSCH) is configured, the UE operation may be controlled based on whether or not dropping of the PUCCH/PUSCH is applied and at least one of the TRPs/panels/CORESET pool indices to which the simultaneously transmitted first UL transmission (for example, PUCCH) and second UL transmission (for example, PUCCH or PUSCH) correspond.

### {STxMP PUCCH+PUCCH}

When the UE supports the STxMP PUCCH+PUCCH/the STxMP PUCCH+PUCCH is configured (or enabled) for the UE by a higher layer parameter, and the two PUCCH transmissions overlap in the time domain, at least one of the following option 2-1 to option 2-2 may be applied.

### <<Option 2-1>>

When a rule (for example, a first rule) that one PUCCH of the PUCCHs overlapping in the time domain (or a part (for example, an overlapping part) of one PUCCH) is dropped is defined/configured, the following UE operation may be supported.

When two PUCCH transmissions are associated with the same TRP/panel/CORESET pool index, the first rule may be applied. In other words, the UE may control to drop one PUCCH of two PUCCHs (or a part of one PUCCH). The PUCCH to be dropped may be determined based on a certain rule. The certain rule may be a UCI type/priority index/panel index/TRP index. Alternatively, as the certain rule, a rule supported in Rel. 18 may be used.

When two PUCCH transmissions are associated with different TRPs/panels/CORESET pool indices, the following option 2-1-1 to option 2-1-2 may be applied.

### - Option 2-1-1

The first rule may be applied. In other words, the UE may control to drop one PUCCH of two PUCCHs (or a part of one PUCCH). When option 2-1-1 is applied, the same UE operation (for example, dropping of one PUCCH) is applied, regardless of the TRP/panel/CORESET pool index associated with each PUCCH. This can simplify the UE operation.

### - Option 2-1-2

Two PUCCHs may be simultaneously transmitted. In other words, the UE may control to simultaneously transmit two PUCCHs without dropping the PUCCH.

When option 2-1-2 is applied, different UE operations (for example, dropping of one PUCCH or PUCCH simultaneous transmission) may be applied, depending on whether or not the TRPs/panels/CORESET pool indices associated with two PUCCHs are the same. In this case, the UCIs (for example, the HARQ-ACKs) can be directly fed back to a plurality of TRPs.

### <<Option 2-2>>

When a rule (for example, a second rule) that the UCIs of two PUCCHs overlapping in the time domain are multiplexed and the PUCCH (or a part (for example, an overlapping part) of the PUCCH) is not dropped is defined/configured, the following UE operation may be supported.

When two PUCCH transmissions are associated with the same TRP/panel/CORESET pool index, the second rule may be applied. In other words, the UE may multiplex and transmit the UCIs of two PUCCHs to the PUCCH (for example, a specific PUCCH). The specific PUCCH to which the UCIs are multiplexed may be determined based on a certain rule. The certain rule may be a UCI type/priority index/panel index/TRP index. Alternatively, as the certain rule, a rule supported in Rel. 18 may be used.

When two PUCCH transmissions are associated with different TRPs/panels/CORESET pool indices, the following option 2-2-1 to option 2-2-2 may be applied.

### - Option 2-2-1

The second rule may be applied. In other words, the UE may multiplex and transmit the UCIs of two PUCCHs to the PUCCH (for example, a specific PUCCH).

Option 2-2-1 may be applied when "joint" (for example, ackNackFeedbackMode = joint) is configured as the HARQ-ACK feedback mode or the HARQ-ACK is not included in the UCI.

### - Option 2-2-2

Two PUCCHs may be simultaneously transmitted. In other words, the UE may control to transmit the UCIs corresponding to the respective PUCCHs by using respectively corresponding PUCCHs (simultaneously transmit two PUCCHs). Option 2-2-2 may be applied when "separate" (for example, ackNackFeedbackMode = separate) is configured as the HARQ-ACK feedback mode and the HARQ-ACK is included in the UCI.

### {STxMP PUCCH+PUSCH}

When the UE supports the STxMP PUCCH+PUSCH/the STxMP PUCCH+PUSCH is configured (or enabled) for the UE by a higher layer parameter, and PUCCH transmission and PUSCH transmission overlap in the time domain, at least one of the following option 2-3 to option 2-4 may be applied.

### <<Option 2-3>>

When a rule (for example, a third rule) that the PUCCH (or a part (for example, an overlapping part) of the PUCCH) or the PUSCH (or a part (for example, an overlapping part) of the PUSCH) out of the PUCCH and the PUSCH overlapping in the time domain is dropped is defined/configured, the following UE operation may be supported.

When PUCCH transmission and PUSCH transmission are associated with the same TRP/panel/CORESET pool index, the third rule may be applied. In other words, the UE may control to drop one of the PUCCH and the PUSCH (or a part of one of the PUCCH and the PUSCH). The UL channel (for example, the PUCCH or the PUSCH) to be dropped may be determined based on a certain rule. The certain rule may be a UCI type/priority index/panel index/TRP index. Alternatively, as the certain rule, a rule supported in Rel. 18 may be used.

When PUCCH transmission and PUSCH transmission are associated with different TRPs/panels/CORESET pool indices, the following option 2-3-1 to option 2-3-2 may be applied.

### - Option 2-3-1

The third rule may be applied. In other words, the UE may control to drop one of the PUCCH and the PUSCH (or a part of one of the PUCCH and the PUSCH). When option 2-3-1 is applied, the same UE operation (for example, dropping of one PUCCH) is applied, regardless of the TRP/panel/CORESET pool index associated with each PUCCH. This can simplify the UE operation.

### - Option 2-3-2

The PUCCH and the PUSCH may be simultaneously transmitted. In other words, the UE may control to simultaneously transmit the PUCCH and the PUSCH without dropping the PUCCH or the PUSCH.

When option 2-3-2 is applied, different UE operations (for example, dropping of one PUCCH or PUCCH simultaneous transmission) may be applied, depending on whether or not the TRPs/panels/CORESET pool indices respectively associated with the PUCCH and the PUSCH are the same. In this case, the UCIs (for example, the HARQ-ACKs) corresponding to respective TRPs can be directly fed back to the TRPs.

### <<Option 2-4>>

When a rule (for example, a fourth rule) that the UCI is multiplexed to the PUSCH and the PUCCH/PUSCH (or a part (for example, an overlapping part) of the PUCCH/PUSCH) is not dropped is defined/configured, the following UE operation may be supported.

When PUCCH transmission and PUSCH transmission are associated with the same TRP/panel/CORESET pool index, the fourth rule may be applied. In other words, the UE may multiplex and transmit the UCI of the PUCCH to the PUSCH.

When PUCCH transmission and PUSCH transmission are associated with different TRPs/panels/CORESET pool indices, the following option 2-4-1 to option 2-4-2 may be applied.

### - Option 2-4-1

The fourth rule may be applied. In other words, the UE may multiplex and transmit the UCI of the PUCCH to the PUSCH. Option 2-4-1 may be applied when "joint" (for example, ackNackFeedbackMode = joint) is configured as the HARQ-ACK feedback mode or the HARQ-ACK is not included in the UCI.

### - Option 2-4-2

The PUCCH and the PUSCH may be simultaneously transmitted. In other words, the UE may control to transmit the UCI corresponding to the PUCCH on the PUCCH and simultaneously transmit the PUCCH and the PUSCH. Option 2-4-2 may be applied when "separate" (for example, ackNackFeedbackMode = separate) is configured as the HARQ-ACK feedback mode and the HARQ-ACK is included in the UCI.

### <Third Embodiment>

A third embodiment relates to UE operation based on priorities of simultaneously transmitted UL channels (for example, STxMP PUCCH+PUCCH). The third embodiment may be employed individually, or may be employed in combination with another embodiment.

The UE may be configured with a higher layer parameter (for example, uci-MuxWithDiffPrio) related to multiplexing of the UCIs (for example, the HARQ-ACKs) having different priorities. When the higher layer parameter is configured/enabled, multiplexing of the UCI (for example, the HARQ-ACK) having a first priority (for example, a high priority (HP)) and the UCI (for example, the HARQ-ACK) having a second priority (for example, a low priority (LP)) lower than the first priority to the PUCCH/PUSCH for a primary PUCCH group and a secondary PUCCH group may be enabled.

For example, when the higher layer parameter (for example, uci-MuxWithDiffPrio) is configured, and the PUCCH (hereinafter also referred to as an HP-PUCCH) having the first priority and the PUCCH (hereinafter also referred to as an LP-PUCCH) having the second priority overlap in the time domain, the following UE operation #3 (or multiplexing method) may be supported/applied.

### {UE Operation #3/Multiplexing Method}

For the "LP-PUCCH including only the HARQ-ACK information" and the "HP-PUCCH including only the HARQ-ACK information", the UE may multiplex the HARQ-ACK of the LP-PUCCH and the HARQ-ACK of the HP-PUCCH to the HP-PUCCH resource.

For the "LP-PUCCH including only the HARQ-ACK information" and the "HP-PUCCH including the HARQ-ACK and the SR", the UE may multiplex the HARQ-ACK of the LP-PUCCH, the HARQ-ACK of the HP-PUCCH, and the SR of the HP-PUCCH to the HP-PUCCH resource.

For the "LP-PUCCH including the HARQ-ACK and the CSI/SR" and the "HP-PUCCH including only the HARQ-ACK information", the UE may multiplex the HARQ-ACK of the LP-PUCCH and the HARQ-ACK of the HP-PUCCH to the HP-PUCCH resource. On the other hand, the UE may drop the CSI/SR of the LP-PUCCH.

For the "LP-PUCCH including the HARQ-ACK and the CSI/SR" and the "HP-PUCCH including the HARQ-ACK and the SR", the UE may multiplex the HARQ-ACK of the LP-PUCCH, the HARQ-ACK of the HP-PUCCH, and the SR of the HP-PUCCH to the HP-PUCCH resource. On the other hand, the UE may drop the CSI/SR of the LP-PUCCH.

In UE operation #3, the PUCCH (for example, the LP-PUCCH/HP-PUCCH) including the HARQ-ACK may be the PUCCH without repetition (for example, repetition). The LP-PUCCH may be the PUCCH including an LP-HARQ. The HP-PUCCH may be the PUCCH including an HP-HARQ (or an HP-HARQ/SR).

### {STxMP PUCCH+PUCCH}

When the UE supports the STxMP PUCCH+PUCCH/the STxMP PUCCH+PUCCH is configured (or enabled) for the UE by a higher layer parameter, multiplexing of the UCIs (for example, the HARQ-ACKs or the like) having different priorities to the PUCCH is enabled, and two PUCCH transmissions having different priorities overlap in the time domain, the UE operation to be applied may be determined based on a certain condition.

As the certain condition, the UE operation to be applied may be determined based on at least one of the TRPs/panels/CORESET pool indices to which respective PUCCHs correspond (for example, whether they correspond to the same TRP/correspond to different TRPs), the content of the UCI of the HP-PUCCH, and the content of the LP-PUCCH. For example, when two PUCCH transmissions (for example, the LP-PUCCH and the HP-PUCCH) having different priorities overlap in the time domain, at least one of the following case 3-1 to case 3-4 may be supported/applied.

### <<Case 3-1>>

For the "LP-PUCCH including only the HARQ-ACK information" and the "HP-PUCCH including only the HARQ-ACK information", the following UE operation may be applied.

When two PUCCHs are associated with the same TRP/panel/CORESET pool index, UE operation #3 described above may be applied. For example, the UE may multiplex the HARQ-ACK of the LP-PUCCH and the HARQ-ACK of the HP-PUCCH to the HP-PUCCH resource.

When two PUCCHs are associated with different TRPs/panels/CORESET pool indices, at least one of option 3-1-1 to option 3-1-2 may be applied.

### - Option 3-1-1

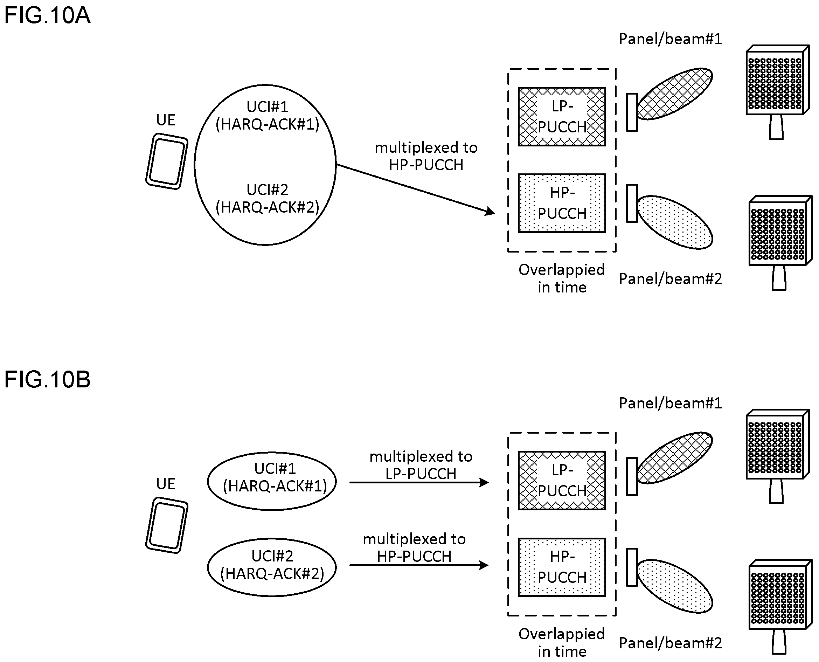

UE operation #3 described above may be applied. For example, the UE may multiplex the HARQ-ACK of the LP-PUCCH and the HARQ-ACK of the HP-PUCCH to the HP-PUCCH resource (see FIG. 10A). FIG. 10A shows a case in which the LP-PUCCH and the HP-PUCCH are associated with different TRPs/panels/CORESET pool indices, and HARQ-ACK #1 (UCI #1) of the LP-PUCCH and HARQ-ACK #2 (UCI #2) of the HP-PUCCH are multiplexed and transmitted to the HP-PUCCH resource in a multiplexing manner.

When option 3-1-1 is applied, the same UE operation is applied, regardless of the TRP/panel/CORESET pool index associated with each PUCCH. This can simplify the UE operation.

### - Option 3-1-2

Two PUCCHs may be simultaneously transmitted. For example, the UE may multiplex and transmit the HARQ-ACK of the LP-PUCCH to the LP-PUCCH resource, and multiplex and transmit the HARQ-ACK of the HP-PUCCH to the HP-PUCCH resource (see FIG. 10B). FIG. 10B shows a case in which the LP-PUCCH and the HP-PUCCH are associated with different TRPs/panels/CORESET pool indices, and the LP-PUCCH including HARQ-ACK #1 (UCI #1) and the HP-PUCCH including HARQ-ACK #2 (UCI #2) are simultaneously transmitted.

When option 3-1-2 is applied, different UE operations may be applied, depending on whether or not the TRPs/panels/CORESET pool indices associated with two PUCCHs are the same. In this case, owing to simultaneous transmission of a plurality of PUCCHs corresponding to different TRPs, the UCIs (for example, the HARQ-ACKs) can be respectively directly fed back to corresponding TRPs.

### <<Case 3-2>>

For the "LP-PUCCH including only the HARQ-ACK information" and the "HP-PUCCH including the HARQ-ACK and the SR", the following UE operation may be applied.

When two PUCCHs are associated with the same TRP/panel/CORESET pool index, UE operation #3 described above may be applied. For example, the UE may multiplex the HARQ-ACK of the LP-PUCCH, the HARQ-ACK of the HP-PUCCH, and the SR of the HP-PUCCH to the HP-PUCCH resource.

When two PUCCHs are associated with different TRPs/panels/CORESET pool indices, at least one of option 3-2-1 to option 3-2-2 may be applied.

### - Option 3-2-1

UE operation #3 described above may be applied. For example, the UE may multiplex the HARQ-ACK of the LP-PUCCH, the HARQ-ACK of the HP-PUCCH, and the SR of the HP-PUCCH to the HP-PUCCH resource. When option 3-2-1 is applied, the same UE operation is applied, regardless of the TRP/panel/CORESET pool index associated with each PUCCH. This can simplify the UE operation.

### - Option 3-2-2

Two PUCCHs may be simultaneously transmitted. For example, the UE may multiplex and transmit the HARQ-ACK of the LP-PUCCH to the LP-PUCCH resource, and multiplex and transmit the HARQ-ACK and the SR of the HP-PUCCH to the HP-PUCCH resource. When option 3-2-2 is applied, different UE operations may be applied, depending on whether or not the TRPs/panels/CORESET pool indices associated with two PUCCHs are the same. In this case, owing to simultaneous transmission of a plurality of PUCCHs corresponding to different TRPs, the UCIs (for example, the HARQ-ACKs) can be respectively directly fed back to corresponding TRPs.

### <<Case 3-3>>

For the "LP-PUCCH including the HARQ-ACK and the CSI/SR" and the "HP-PUCCH including only the HARQ-ACK information", the following UE operation may be applied.

When two PUCCHs are associated with the same TRP/panel/CORESET pool index, UE operation #3 described above may be applied. For example, the UE may multiplex the HARQ-ACK of the LP-PUCCH and the HARQ-ACK of the HP-PUCCH to the HP-PUCCH resource. On the other hand, the UE may drop the CSI/SR of the LP-PUCCH.

When two PUCCHs are associated with different TRPs/panels/CORESET pool indices, at least one of option 3-3-1 to option 3-3-2 may be applied.

### - Option 3-3-1

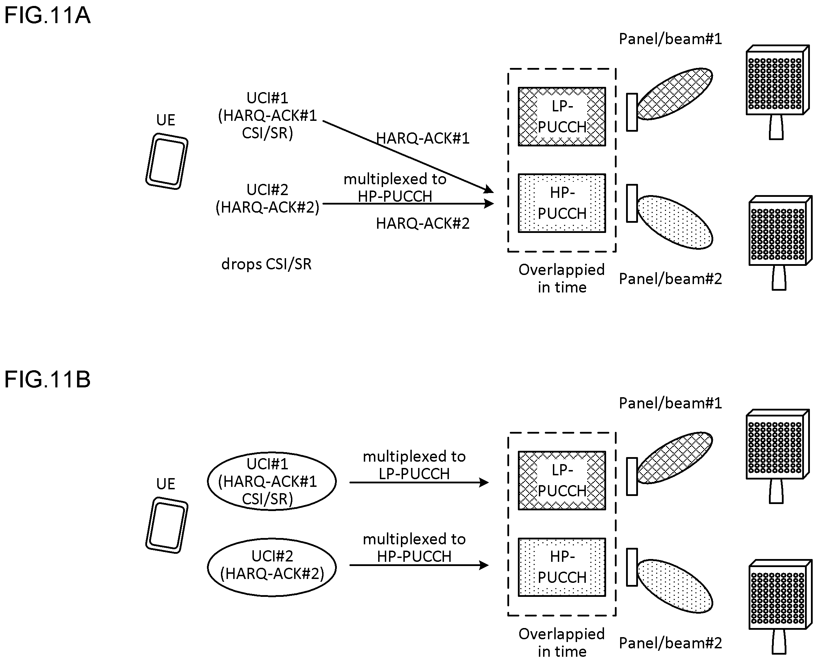

UE operation #3 described above may be applied. For example, the UE may multiplex the HARQ-ACK of the LP-PUCCH and the HARQ-ACK of the HP-PUCCH to the HP-PUCCH resource. On the other hand, the UE may drop the CSI/SR of the LP-PUCCH (see FIG. 11A). FIG. 11A shows a case in which the LP-PUCCH and the HP-PUCCH are associated with different TRPs/panels/CORESET pool indices, HARQ-ACK #1 (UCI #1) of the LP-PUCCH and HARQ-ACK #2 (UCI #2) of the HP-PUCCH are multiplexed and transmitted to the HP-PUCCH resource and the multiplexed PUSCH, and the CSI/SR of the LP-PUCCH is dropped.

When option 3-3-1 is applied, the same UE operation is applied, regardless of the TRP/panel/CORESET pool index associated with each PUCCH. This can simplify the UE operation.

### - Option 3-3-2

Two PUCCHs may be simultaneously transmitted. For example, the UE may multiplex and transmit the HARQ-ACK and the CSI/SR of the LP-PUCCH to the LP-PUCCH resource, and multiplex and transmit the HARQ-ACK of the HP-PUCCH to the HP-PUCCH resource (see FIG. 11B). FIG. 11B shows a case in which the LP-PUCCH and the HP-PUCCH are associated with different TRPs/panels/CORESET pool indices, and the LP-PUCCH including HARQ-ACK #1 (UCI #1) and the CSI/SR and the HP-PUCCH including HARQ-ACK #2 (UCI #2) are simultaneously transmitted.

When option 3-3-2 is applied, different UE operations may be applied, depending on whether or not the TRPs/panels/CORESET pool indices associated with two PUCCHs are the same. In this case, owing to simultaneous transmission of a plurality of PUCCHs corresponding to different TRPs, the UCIs (for example, the HARQ-ACKs) can be respectively directly fed back to corresponding TRPs. The UCI (for example, the CSI/SR) other than the HARQ-ACK corresponding to the LP-PUCCH can be transmitted without being dropped.

As a variation of option 3-3-2, the UE may multiplex the HARQ-ACK of the LP-PUCCH and the HARQ-ACK of the HP-PUCCH to the HP-PUCCH resource, multiplex the remaining UCI (for example, the CSI/SR of the LP-PUCCH) to the LP-PUCCH, and simultaneously transmit the LP-PUCCH and the HP-PUCCH. The UE operation may be applied when the HARQ-ACK feedback mode is "joint".

### <<Case 3-4>>

For the "LP-PUCCH including the HARQ-ACK and the CSI/SR" and the "HP-PUCCH including the HARQ-ACK and the SR", the following UE operation may be applied.

When two PUCCHs are associated with the same TRP/panel/CORESET pool index, UE operation #3 described above may be applied. For example, the UE may multiplex the HARQ-ACK of the LP-PUCCH, the HARQ-ACK of the HP-PUCCH, and the SR of the HP-PUCCH to the HP-PUCCH resource. On the other hand, the UE may drop the CSI/SR of the LP-PUCCH.

When two PUCCHs are associated with different TRPs/panels/CORESET pool indices, at least one of option 3-4-1 to option 3-4-2 may be applied.

### - Option 3-4-1

UE operation #3 described above may be applied. For example, the UE may multiplex the HARQ-ACK of the LP-PUCCH, the HARQ-ACK of the HP-PUCCH, and the SR of the HP-PUCCH to the HP-PUCCH resource. On the other hand, the UE may drop the CSI/SR of the LP-PUCCH. When option 3-4-1 is applied, the same UE operation is applied, regardless of the TRP/panel/CORESET pool index associated with each PUCCH. This can simplify the UE operation.

### - Option 3-4-2

Two PUCCHs may be simultaneously transmitted. For example, the UE may multiplex and transmit the HARQ-ACK and the CSI/SR of the LP-PUCCH to the LP-PUCCH resource, and multiplex and transmit the HARQ-ACK and the SR of the HP-PUCCH to the HP-PUCCH resource. When option 3-4-2 is applied, different UE operations may be applied, depending on whether or not the TRPs/panels/CORESET pool indices associated with two PUCCHs are the same. In this case, owing to simultaneous transmission of a plurality of PUCCHs corresponding to different TRPs, the UCIs (for example, the HARQ-ACKs) can be respectively directly fed back to corresponding TRPs. The UCI (for example, the CSI/SR) other than the HARQ-ACK corresponding to the LP-PUCCH can be transmitted without being dropped.

As a variation of option 3-4-2, the UE may multiplex the HARQ-ACK of the LP-PUCCH, the HARQ-ACK of the HP-PUCCH, and the SR of the HP-PUCCH to the HP-PUCCH resource, multiplex the remaining UCI (for example, the CSI/SR of the LP-PUCCH) to the LP-PUCCH, and simultaneously transmit the LP-PUCCH and the HP-PUCCH. The UE operation may be applied when the HARQ-ACK feedback mode is "joint".

In at least one of case 3-1 to case 3-4, different options may be applied based on the feedback mode (for example, ackNackFeedbackMode) provided/configured for the UE. For example, when the feedback mode is "joint" (for example, ackNackFeedbackMode = joint), option 3-1-1/3-2-1/3-3-1/3-4-1 may be applied. When the feedback mode is "separate" (for example, ackNackFeedbackMode = separate), option 3-1-2/3-2-2/3-3-2/3-4-2 may be applied.

### <Fourth Embodiment>

A fourth embodiment relates to an example of UE operation based on priorities of simultaneously transmitted UL channels (for example, STxMP PUCCH+PUSCH). The fourth embodiment may be employed individually, or may be employed in combination with another embodiment.

The UE may be configured with a higher layer parameter (for example, uci-MuxWithDiffPrio) related to multiplexing of the UCIs (for example, the HARQ-ACKs) having different priorities.

For example, when the higher layer parameter (for example, uci-MuxWithDiffPrio) is configured, and the PUCCH (hereinafter also referred to as the LP-PUCCH) having the second priority and the PUSCH (hereinafter also referred to as an HP-PUSCH) having the first priority higher than the second priority overlap in the time domain, the following UE operation #4 (or multiplexing method) may be supported/applied.

### {UE Operation #4/Multiplexing Method}

For the "LP-PUCCH including only the HARQ-ACK information" and the "HP-PUSCH not including the CSI or the HP-PUSCH including single part CSI", the UE may multiplex the HARQ-ACK information of the LP-PUCCH to the HP-PUSCH.

For the "LP-PUCCH including the HARQ-ACK and the CSI/SR" and the "HP-PUSCH not including the CSI or the HP-PUSCH including single part CSI", the UE may multiplex the HARQ-ACK information of the LP-PUCCH to the HP-PUSCH. On the other hand, the UE may drop the CSI/SR of the LP-PUCCH.

In UE operation #4, the PUCCH (for example, the LP-PUCCH) including the HARQ-ACK may be the PUCCH without repetition (for example, repetition).

### {STxMP PUCCH+PUSCH}

When the UE supports the STxMP PUCCH+PUSCH/the STxMP PUCCH+PUSCH is configured (or enabled) for the UE by a higher layer parameter, multiplexing of the UCIs (for example, the HARQ-ACKs or the like) having different priorities to the PUCCH/PUSCH is enabled, and PUCCH transmission and PUSCH transmission (for example, the LP-PUCCH and the HP-PUSCH) having different priorities overlap in the time domain, the UE operation to be applied may be determined based on a certain condition.

As the certain condition, the UE operation to be applied may be determined based on at least one of the TRPs/panels/CORESET pool indices to which the PUCCH and the PUSCH correspond (for example, whether they correspond to the same TRP/correspond to different TRPs), the content of the UCI of the LP-PUCCH, and the content of the UCI of the HP-PUSCH. For example, when PUCCH transmission and PUSCH transmission (for example, the LP-PUCCH and the HP-PUSCH) having different priorities overlap in the time domain, at least one of the following case 4-1 to case 4-2 may be supported/applied.

### <<Case 4-1>>

For the "LP-PUCCH including only the HARQ-ACK information" and the "HP-PUSCH not including the CSI or the HP-PUSCH including single part CSI", the following UE operation may be applied.

When the PUCCH and the PUSCH are associated with the same TRP/panel/CORESET pool index, UE operation #4 described above may be applied. For example, the UE may multiplex the HARQ-ACK information of the LP-PUCCH to the HP-PUSCH.

When the PUCCH and the PUSCH are associated with different TRPs/panels/CORESET pool indices, at least one of option 4-1-1 to option 4-1-2 may be applied.

### - Option 4-1-1

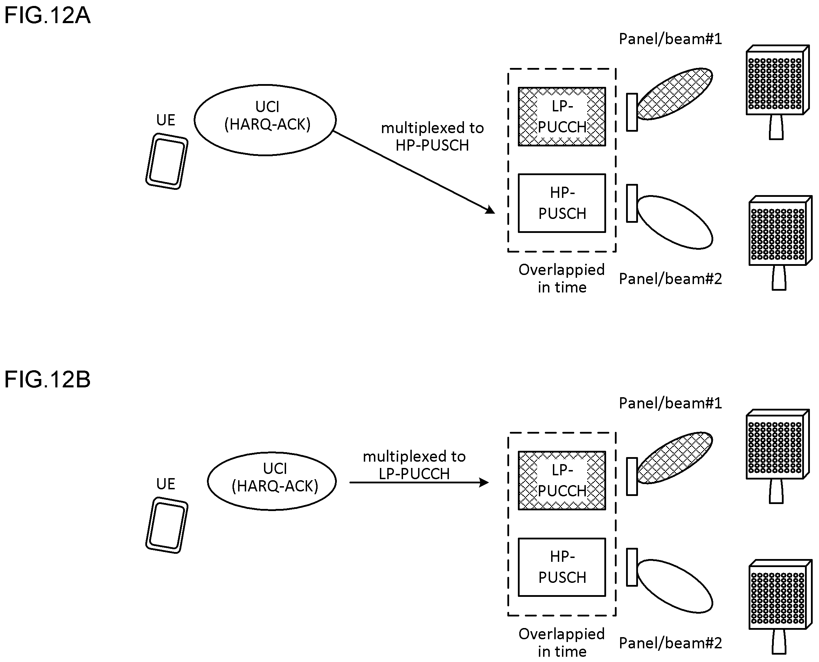

UE operation #4 described above may be applied. For example, the UE may multiplex the HARQ-ACK information of the LP-PUCCH to the HP-PUSCH (see FIG. 12A). FIG. 12A shows a case in which the LP-PUCCH and the HP-PUSCH are associated with different TRPs/panels/CORESET pool indices, and the HARQ-ACK of the LP-PUCCH is multiplexed and transmitted to the HP-PUSCH.

When option 4-1-1 is applied, the same UE operation is applied, regardless of the TRPs/panels/CORESET pool indices associated with the PUCCH and the PUSCH. This can simplify the UE operation.

### - Option 4-1-2

The PUCCH and the PUSCH may be simultaneously transmitted. For example, the UE may multiplex and transmit the HARQ-ACK of the LP-PUCCH to the LP-PUCCH resource, and transmit the HP-PUSCH overlapping the LP-PUCCH in the time domain (see FIG. 12B). FIG. 12B shows a case in which the LP-PUCCH and the HP-PUSCH are associated with different TRPs/panels/CORESET pool indices, and the LP-PUCCH including the HARQ-ACK and the HP-PUSCH are simultaneously transmitted.

When option 4-1-2 is applied, different UE operations may be applied, depending on whether or not the TRPs/panels/CORESET pool indices associated with the PUCCH and the PUSCH are the same.

When simultaneous transmission of the LP-PUCCH and the HP-PUSCH corresponding to different TRPs (or transmission of the LP-PUCCH overlapping the HP-PUSCH) is supported, the UCI (for example, the HARQ-ACK) of the LP-PUCCH can be directly fed back to a corresponding TRP.

### <<Case 4-2>>

For the "LP-PUCCH including the HARQ-ACK and the CSI/SR" and the "HP-PUSCH not including the CSI or the HP-PUSCH including single part CSI", the following UE operation may be applied.

When the PUCCH and the PUSCH are associated with the same TRP/panel/CORESET pool index, UE operation #4 described above may be applied. For example, the UE may multiplex the HARQ-ACK information of the LP-PUCCH to the HP-PUSCH. On the other hand, the UE may drop the CSI/SR of the LP-PUCCH.

When the PUCCH and the PUSCH are associated with different TRPs/panels/CORESET pool indices, at least one of option 4-2-1 to option 4-2-2 may be applied.

### - Option 4-2-1

UE operation #4 described above may be applied. For example, the UE may multiplex the HARQ-ACK information of the LP-PUCCH to the HP-PUSCH. On the other hand, the UE may drop the CSI/SR of the LP-PUCCH. When option 4-2-1 is applied, the same UE operation is applied, regardless of the TRPs/panels/CORESET pool indices associated with the PUCCH and the PUSCH. This can simplify the UE operation.

### - Option 4-2-2

The PUCCH and the PUSCH may be simultaneously transmitted. For example, the UE may multiplex and transmit the HARQ-ACK and the CSI/SR of the LP-PUCCH to the LP-PUCCH resource, and transmit the HP-PUSCH overlapping the LP-PUCCH in the time domain. When option 4-2-2 is applied, different UE operations may be applied, depending on whether or not the TRPs/panels/CORESET pool indices associated with the PUCCH and the PUSCH are the same.

When simultaneous transmission of the LP-PUCCH and the HP-PUSCH corresponding to different TRPs (or transmission of the LP-PUCCH overlapping the HP-PUSCH) is supported, the UCI (for example, the HARQ-ACK) of the LP-PUCCH can be directly fed back to a corresponding TRP.

As a variation of option 4-2-2, the UE may multiplex the HARQ-ACK of the LP-PUCCH to the HP-PUSCH, multiplex the remaining UCI (for example, the CSI/SR of the LP-PUCCH) to the LP-PUCCH, and simultaneously transmit the LP-PUCCH and the HP-PUSCH. The UE operation may be applied when the HARQ-ACK feedback mode is "joint".

In at least one of case 4-1 to case 4-2, different options may be applied based on the feedback mode (for example, ackNackFeedbackMode) provided/configured for the UE. For example, when the feedback mode is "joint" (for example, ackNackFeedbackMode = joint), option 4-1-1/4-2-1 may be applied. When the feedback mode is "separate" (for example, ackNackFeedbackMode = separate), option 4-1-2/4-2-2 may be applied.

### <Fifth Embodiment>

A fifth embodiment relates to another example of UE operation based on priorities of simultaneously transmitted UL channels (for example, STxMP PUCCH+PUSCH). The fifth embodiment may be employed individually, or may be employed in combination with another embodiment.

The UE may be configured with a higher layer parameter (for example, uci-MuxWithDiffPrio) related to multiplexing of the UCIs (for example, the HARQ-ACKs) having different priorities.

For example, when the higher layer parameter (for example, uci-MuxWithDiffPrio) is configured, and the PUCCH (hereinafter also referred to as the HP-PUCCH) having the first priority and the PUSCH (hereinafter also referred to as the HP-PUSCH) having the first priority overlap in the time domain, the following UE operation #5 (or multiplexing method) may be supported/applied.

### {UE Operation #5/Multiplexing Method}

When the HARQ-ACK information (hereinafter also referred to as the LP-HARQ) having the second priority lower than the first priority and the HARQ-ACK information (hereinafter also referred to as the HP-HARQ) having the first priority are transmitted on the HP-PUCCH, and the HP-PUSCH does not include the CSI or includes the single part CSI, the UE may multiplex the LP-HARQ and the HP-HARQ to the HP-PUSCH.

When the HARQ-ACK information (hereinafter also referred to as the LP-HARQ) having the second priority lower than the first priority and the HARQ-ACK information (hereinafter also referred to as the HP-HARQ) having the first priority are transmitted on the HP-PUCCH, and the HP-PUSCH includes a part 1 CSI report and a part 2 CSI report, the UE may multiplex and transmit the HP-HARQ to the HP-PUSCH. On the other hand, the UE may drop the LP-HARQ.

In UE operation #5, the PUCCH (for example, the HP-PUCCH) including the HARQ-ACK may be the PUCCH without repetition (for example, repetition).

### {STxMP PUCCH+PUSCH}

When the UE supports the STxMP PUCCH+PUSCH/the STxMP PUCCH+PUSCH is configured (or enabled) for the UE by a higher layer parameter, multiplexing of the UCIs (for example, the HARQ-ACKs or the like) having different priorities to the PUCCH/PUSCH is enabled, and PUCCH transmission and PUSCH transmission having the same priority (for example, having the first priority) overlap in the time domain, the UE operation to be applied may be determined based on a certain condition.

As the certain condition, the UE operation to be applied may be determined based on at least one of the TRPs/panels/CORESET pool indices to which the PUCCH and the PUSCH correspond (for example, whether they correspond to the same TRP/correspond to different TRPs), the content of the UCI of the HP-PUCCH, and the content of the UCI of the HP-PUSCH. For example, when PUCCH transmission and PUSCH transmission (for example, the HP-PUCCH and the HP-PUSCH) having the same priority overlap in the time domain, at least one of the following case 5-1 to case 5-2 may be supported/applied.

### <<Case 5-1>>

When the LP-HARQ and the HP-HARQ are transmitted on the HP-PUCCH, and the HP-PUSCH does not include the CSI or includes the single part CSI, the following UE operation may be applied.

When the PUCCH and the PUSCH are associated with the same TRP/panel/CORESET pool index, UE operation #5 described above may be applied. For example, the UE may multiplex the LP-HARQ and the HP-HARQ to the HP-PUSCH.

When the PUCCH and the PUSCH are associated with different TRPs/panels/CORESET pool indices, at least one of option 5-1-1 to option 5-1-2 may be applied.

### - Option 5-1-1

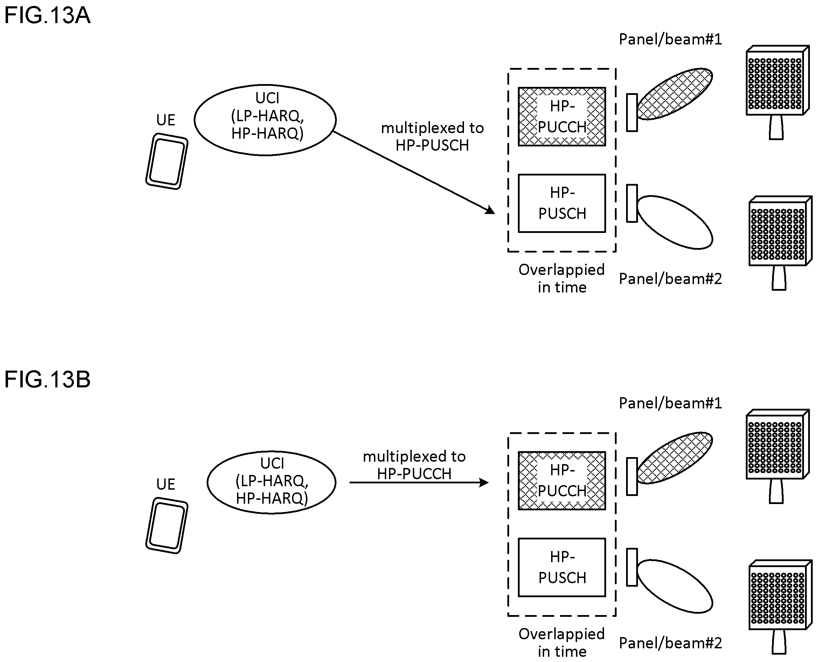

UE operation #5 described above may be applied. For example, the UE may multiplex the LP-HARQ and the HP-HARQ to the HP-PUSCH (see FIG. 13A). FIG. 13A shows a case in which the HP-PUCCH and the HP-PUSCH are associated with different TRPs/panels/CORESET pool indices, and the LP-HARQ and the HP-HARQ are multiplexed and transmitted to the HP-PUSCH.

When option 5-1-1 is applied, the same UE operation is applied, regardless of the TRPs/panels/CORESET pool indices associated with the PUCCH and the PUSCH. This can simplify the UE operation.

### - Option 5-1-2

The PUCCH and the PUSCH may be simultaneously transmitted. For example, the UE may multiplex and transmit the LP-HARQ and the HP-HARQ to the HP-PUCCH resource, and transmit the HP-PUSCH overlapping the HP-PUCCH in the time domain (see FIG. 13B). FIG. 13B shows a case in which the HP-PUCCH and the HP-PUSCH are associated with different TRPs/panels/CORESET pool indices, and the HP-PUCCH including the LP-HARQ and the HP-HARQ and the HP-PUSCH are simultaneously transmitted.

When option 5-1-2 is applied, different UE operations may be applied, depending on whether or not the TRPs/panels/CORESET pool indices associated with the PUCCH and the PUSCH are the same.

When simultaneous transmission of the HP-PUCCH and the HP-PUSCH corresponding to different TRPs (or transmission of the HP-PUCCH overlapping the HP-PUSCH) is supported, the UCI (for example, the LP-HARQ/HP-HARQ) of the HP-PUCCH can be directly fed back to a corresponding TRP.

### <<Case 5-2>>

When the LP-HARQ and the HP-HARQ are transmitted on the HP-PUCCH, and the HP-PUSCH includes the part 1 CSI report and the part 2 CSI report, the following UE operation may be applied.

When the PUCCH and the PUSCH are associated with the same TRP/panel/CORESET pool index, UE operation #5 described above may be applied. For example, the UE may multiplex and transmit the HP-HARQ to the HP-PUSCH, and drop the LP-HARQ.

When the PUCCH and the PUSCH are associated with different TRPs/panels/CORESET pool indices, at least one of option 5-2-1 to option 5-2-2 may be applied.

### - Option 5-2-1

UE operation #5 described above may be applied. For example, the UE may multiplex and transmit the HP-HARQ to the HP-PUSCH, and drop the LP-HARQ. When option 5-2-1 is applied, the same UE operation is applied, regardless of the TRPs/panels/CORESET pool indices associated with the PUCCH and the PUSCH. This can simplify the UE operation.

### - Option 5-2-2

The PUCCH and the PUSCH may be simultaneously transmitted. For example, the UE may multiplex and transmit the LP-HARQ and the HP-HARQ to the HP-PUCCH resource, and transmit the HP-PUSCH overlapping the HP-PUCCH in the time domain. When option 5-2-2 is applied, different UE operations may be applied, depending on whether or not the TRPs/panels/CORESET pool indices associated with the PUCCH and the PUSCH are the same.

When simultaneous transmission of the HP-PUCCH and the HP-PUSCH corresponding to different TRPs (or transmission of the HP-PUCCH overlapping the HP-PUSCH) is supported, the UCI (for example, the LP-HARQ/HP-HARQ) of the HP-PUCCH can be directly fed back to a corresponding TRP.

As a variation of option 5-1-2/5-2-2, the UE may multiplex the HP-HARQ to the HP-PUSCH, multiplex the LP-HARQ to the HP-PUCCH, and simultaneously transmit the HP-PUCCH and the HP-PUSCH. Alternatively, as another variation of option 5-1-2/5-2-2, the UE may multiplex the HP-HARQ to the HP-PUSCH, multiplex the LP-HARQ to the LP-PUCCH, and simultaneously transmit the LP-PUCCH and the HP-PUSCH.

In at least one of case 5-1 to case 5-2, different options may be applied based on the feedback mode (for example, ackNackFeedbackMode) provided/configured for the UE. For example, when the feedback mode is "joint" (for example, ackNackFeedbackMode = joint), option 5-1-1/5-2-1 may be applied. When the feedback mode is "separate" (for example, ackNackFeedbackMode = separate), option 5-1-2/5-2-2 may be applied.

### <Sixth Embodiment>

A sixth embodiment relates to another example of UE operation based on priorities of simultaneously transmitted UL channels (for example, STxMP PUCCH+PUSCH). The sixth embodiment may be employed individually, or may be employed in combination with another embodiment.

The UE may be configured with a higher layer parameter (for example, uci-MuxWithDiffPrio) related to multiplexing of the UCIs (for example, the HARQ-ACKs) having different priorities.

For example, when the higher layer parameter (for example, uci-MuxWithDiffPrio) is configured, and the PUCCH (hereinafter also referred to as the HP-PUCCH) having the first priority and the PUSCH (hereinafter also referred to as an LP-PUSCH) having the second priority lower than the first priority overlap in the time domain, the following UE operation #6 (or multiplexing method) may be supported/applied.

### {UE Operation #6/Multiplexing Method}

For the "HP-PUCCH including the HP-HARQ" and the "LP-PUSCH not including the CSI, or the LP-PUSCH including single part CSI, or the LP-PUSCH including a part 1 CSI report and a part 2 CSI report", the UE may multiplex the HP-HARQ to the LP-PUSCH.

For the "HP-PUCCH including the HP-HARQ" and the "LP-PUSCH including configured grant UCI (for example, CG-UCI), part 1 CSI, and part 2 CSI", the UE may multiplex the HP-HARQ to the LP-PUSCH. On the other hand, the UE may drop the part 2 CSI of the LP-PUSCH.

For the "HP-PUCCH including the HP-HARQ and the LP-HARQ" and the "LP-PUSCH not including the CSI or the LP-PUSCH including single part CSI", the UE may multiplex the HP-HARQ and the LP-HARQ to the LP-PUSCH.

For the "HP-PUCCH including the HP-HARQ and the LP-HARQ" and the "LP-PUSCH including a part 1 CSI report and a part 2 CSI report", the UE may multiplex the HP-HARQ and the LP-HARQ to the LP-PUSCH. On the other hand, the UE may drop the part 2 CSI of the LP-PUSCH.

In UE operation #6, the PUCCH (for example, the HP-PUCCH) including the HARQ-ACK may be the PUCCH without repetition.

### {STxMP PUCCH+PUSCH}

When the UE supports the STxMP PUCCH+PUSCH/the STxMP PUCCH+PUSCH is configured (or enabled) for the UE by a higher layer parameter, multiplexing of the UCIs (for example, the HARQ-ACKs or the like) having different priorities to the PUCCH/PUSCH is enabled, and PUCCH transmission and PUSCH transmission (for example, the HP-PUCCH and the LP-PUSCH) having different priorities overlap in the time domain, the UE operation to be applied may be determined based on a certain condition.

As the certain condition, the UE operation to be applied may be determined based on at least one of the TRPs/panels/CORESET pool indices to which the PUCCH and the PUSCH correspond (for example, whether they correspond to the same TRP/correspond to different TRPs), the content of the UCI of the HP-PUCCH, and the content of the UCI of the LP-PUSCH. For example, when PUCCH transmission and PUSCH transmission (for example, the HP-PUCCH and the LP-PUSCH) having different priorities overlap in the time domain, at least one of the following case 6-1 to case 6-4 may be supported/applied.

### <<Case 6-1>>

For the "HP-PUCCH including the HP-HARQ" and the "LP-PUSCH not including the CSI, or the LP-PUSCH including single part CSI, or the LP-PUSCH including a part 1 CSI report and a part 2 CSI report", the following UE operation may be applied.

When the PUCCH and the PUSCH are associated with the same TRP/panel/CORESET pool index, UE operation #6 described above may be applied. For example, the UE may multiplex the HP-HARQ information to the LP-PUSCH.

When the PUCCH and the PUSCH are associated with different TRPs/panels/CORESET pool indices, at least one of option 6-1-1 to option 6-1-2 may be applied.

### - Option 6-1-1

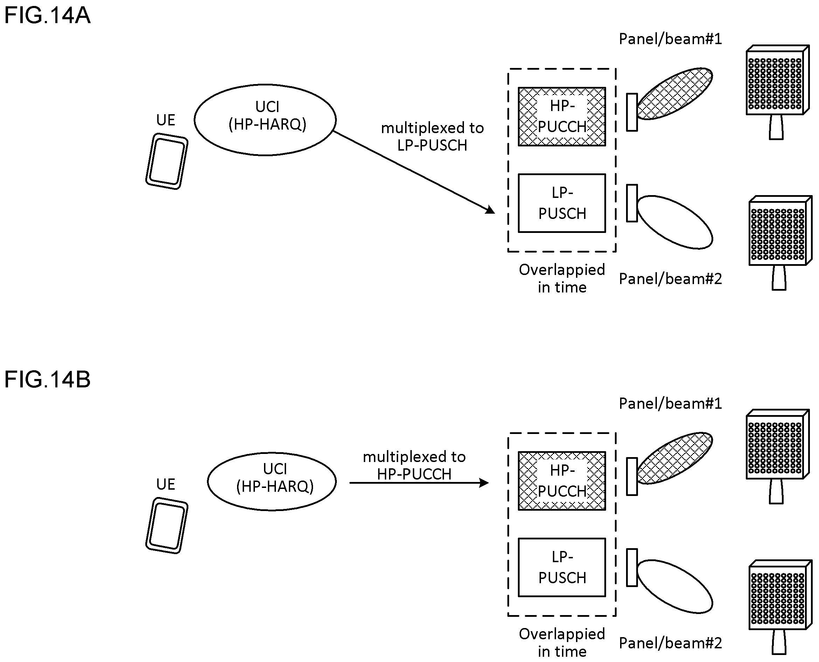

UE operation #6 described above may be applied. For example, the UE may multiplex the HP-HARQ information to the LP-PUSCH (see FIG. 14A). FIG. 14A shows a case in which the HP-PUCCH and the LP-PUSCH are associated with different TRPs/panels/CORESET pool indices, and the HARQ-ACK (HP-HARQ) of the HP-PUCCH is multiplexed and transmitted to the LP-PUSCH.

When option 6-1-1 is applied, the same UE operation is applied, regardless of the TRPs/panels/CORESET pool indices associated with the PUCCH and the PUSCH. This can simplify the UE operation.

### - Option 6-1-2

The PUCCH and the PUSCH may be simultaneously transmitted. For example, the UE may multiplex and transmit the HP-HARQ to the HP-PUCCH resource, and transmit the LP-PUSCH overlapping the HP-PUCCH in the time domain (see FIG. 14B). FIG. 14B shows a case in which the HP-PUCCH and the LP-PUSCH are associated with different TRPs/panels/CORESET pool indices, and the HP-PUCCH including the HP-HARQ and the LP-PUSCH are simultaneously transmitted.

When option 6-1-2 is applied, different UE operations may be applied, depending on whether or not the TRPs/panels/CORESET pool indices associated with the PUCCH and the PUSCH are the same.

When simultaneous transmission of the HP-PUCCH and the LP-PUSCH corresponding to different TRPs (or transmission of the HP-PUCCH overlapping the LP-PUSCH) is supported, the UCI (for example, the HP-HARQ) of the HP-PUCCH can be directly fed back to a corresponding TRP.

### <<Case 6-2>>

For the "HP-PUCCH including the HP-HARQ" and the "LP-PUSCH including configured grant UCI (for example, CG-UCI), part 1 CSI, and part 2 CSI", the following UE operation may be applied.

When the PUCCH and the PUSCH are associated with the same TRP/panel/CORESET pool index, UE operation #6 described above may be applied. For example, the UE may multiplex the HP-HARQ information to the LP-PUSCH, and drop the part 2 CSI of the LP-PUSCH.

When the PUCCH and the PUSCH are associated with different TRPs/panels/CORESET pool indices, at least one of option 6-2-1 to option 6-2-2 may be applied.

### - Option 6-2-1

UE operation #6 described above may be applied. For example, the UE may multiplex the HP-HARQ information to the LP-PUSCH, and drop the part 2 CSI of the LP-PUSCH. When option 6-2-1 is applied, the same UE operation is applied, regardless of the TRPs/panels/CORESET pool indices associated with the PUCCH and the PUSCH. This can simplify the UE operation.

### - Option 6-2-2

The PUCCH and the PUSCH may be simultaneously transmitted. For example, the UE may multiplex and transmit the HP-HARQ to the HP-PUCCH resource, and transmit the LP-PUSCH (for example, the LP-PUSCH including CG-UCI, part 1 CSI, and part 2 CSI) overlapping the HP-PUCCH in the time domain. When option 6-2-2 is applied, different UE operations may be applied, depending on whether or not the TRPs/panels/CORESET pool indices associated with the PUCCH and the PUSCH are the same.

When simultaneous transmission of the HP-PUCCH and the LP-PUSCH corresponding to different TRPs (or transmission of the HP-PUCCH overlapping the LP-PUSCH) is supported, the UCI (for example, the HP-HARQ) of the HP-PUCCH can be directly fed back to a corresponding TRP.

### <<Case 6-3>>

For the "HP-PUCCH including the HP-HARQ and the LP-HARQ" and the "LP-PUSCH not including the CSI or the LP-PUSCH including single part CSI", the following UE operation may be applied.

When the PUCCH and the PUSCH are associated with the same TRP/panel/CORESET pool index, UE operation #6 described above may be applied. For example, the UE may multiplex the HP-HARQ and the LP-HARQ to the LP-PUSCH.

When the PUCCH and the PUSCH are associated with different TRPs/panels/CORESET pool indices, at least one of option 6-3-1 to option 6-3-2 may be applied.

### - Option 6-3-1

UE operation #6 described above may be applied. For example, the UE may multiplex the HP-HARQ and the LP-HARQ to the LP-PUSCH. When option 6-3-1 is applied, the same UE operation is applied, regardless of the TRPs/panels/CORESET pool indices associated with the PUCCH and the PUSCH. This can simplify the UE operation.

### - Option 6-3-2

The PUCCH and the PUSCH may be simultaneously transmitted. For example, the UE may multiplex and transmit the HP-HARQ and the LP-HARQ to the HP-PUCCH resource, and transmit the LP-PUSCH overlapping the HP-PUCCH in the time domain. When option 6-3-2 is applied, different UE operations may be applied, depending on whether or not the TRPs/panels/CORESET pool indices associated with the PUCCH and the PUSCH are the same.

When simultaneous transmission of the HP-PUCCH and the LP-PUSCH corresponding to different TRPs (or transmission of the HP-PUCCH overlapping the LP-PUSCH) is supported, the UCI (for example, the HP-HARQ/LP-HARQ) of the HP-PUCCH can be directly fed back to a corresponding TRP.

### <<Case 6-4>>

For the "HP-PUCCH including the HP-HARQ and the LP-HARQ" and the "LP-PUSCH including a part 1 CSI report and a part 2 CSI report", the following UE operation may be applied.

When the PUCCH and the PUSCH are associated with the same TRP/panel/CORESET pool index, UE operation #6 described above may be applied. For example, the UE may multiplex the HP-HARQ and the LP-HARQ to the LP-PUSCH, and drop the part 2 CSI of the LP-PUSCH.

When the PUCCH and the PUSCH are associated with different TRPs/panels/CORESET pool indices, at least one of option 6-4-1 to option 6-4-2 may be applied.

### - Option 6-4-1

UE operation #6 described above may be applied. For example, the UE may multiplex the HP-HARQ and the LP-HARQ to the LP-PUSCH, and drop the part 2 CSI of the LP-PUSCH. When option 6-4-1 is applied, the same UE operation is applied, regardless of the TRPs/panels/CORESET pool indices associated with the PUCCH and the PUSCH. This can simplify the UE operation.

### - Option 6-4-2

The PUCCH and the PUSCH may be simultaneously transmitted. For example, the UE may multiplex and transmit the HP-HARQ and the LP-HARQ to the HP-PUCCH resource, and transmit the LP-PUSCH (for example, the LP-PUSCH including a part 1 CSI report and a part 2 CSI report) overlapping the HP-PUCCH in the time domain. When option 6-4-2 is applied, different UE operations may be applied, depending on whether or not the TRPs/panels/CORESET pool indices associated with the PUCCH and the PUSCH are the same.

When simultaneous transmission of the HP-PUCCH and the LP-PUSCH corresponding to different TRPs (or transmission of the HP-PUCCH overlapping the LP-PUSCH) is supported, the UCI (for example, the HP-HARQ/LP-HARQ) of the HP-PUCCH can be directly fed back to a corresponding TRP.

In at least one of case 6-1 to case 6-4, different options may be applied based on the feedback mode (for example, ackNackFeedbackMode) provided/configured for the UE. For example, when the feedback mode is "joint" (for example, ackNackFeedbackMode = joint), option 6-1-1/6-2-1/6-3-1/6-4-1 may be applied. When the feedback mode is "separate" (for example, ackNackFeedbackMode = separate), option 6-1-2/6-2-2/6-3-2/6-4-2 may be applied.

### <Seventh Embodiment>

A seventh embodiment relates to another example of UE operation when STxMP including at least an uplink control channel (for example, a PUCCH) is supported. The seventh embodiment may be employed individually, or may be employed in combination with another embodiment.

When the first UL transmission (for example, the PUCCH/PUSCH) having the first priority and the second UL transmission (for example, the PUCCH/PUSCH) having the second priority lower than the first priority overlap in the time domain (condition 7-1), and the higher layer parameter (for example, uci-MuxWithDiffPrio) for enabling multiplexing of the UCIs (for example, the HARQ-ACKs) having different priorities is not configured (condition 7-2), or the higher layer parameter (for example, uci-MuxWithDiffPrio) is configured but a case other than a certain case applies (condition 7-3), the UE may control to drop the second UL transmission having the second priority and transmit the first UL transmission having the first priority.

The certain case may be at least one of UE operation #3 to UE operation #6 shown in the third embodiment to the sixth embodiment, for example.

When STxMP including the PUCCH (for example, STxMP PUCCH+PUCCH/STxMP PUCCH+PUSCH) is supported/enabled by the higher layer parameter, and condition 7-1 and condition 7-2 or condition 7-3 are satisfied, the UE operation to be applied may be determined based on the TRPs/panels/CORESET pool indices to which the first UL transmission and the second UL transmission correspond (for example, whether they correspond to the same TRP/correspond to different TRPs).

When the first UL transmission (for example, the HP-PUCCH/HP-PUSCH) and the second UL transmission (for example, the LP-PUCCH/PUSCH) are associated with the same TRP/panel/CORESET pool index, the UE may control to drop the second UL transmission (for example, the LP-PUCCH/PUSCH) and transmit the first UL transmission (for example, the HP-PUCCH/HP-PUSCH).

When the first UL transmission (for example, the HP-PUCCH/HP-PUSCH) and the second UL transmission (for example, the LP-PUCCH/PUSCH) are associated with different TRPs/panels/CORESET pool indices, at least one of option 7-1 to option 7-2 may be applied.

### - Option 7-1

The UE may control to drop the second UL transmission (for example, the LP-PUCCH/PUSCH) and transmit the first UL transmission (for example, the HP-PUCCH/HP-PUSCH). When option 7-1 is applied, the same UE operation is applied, regardless of the TRPs/panels/CORESET pool indices associated with the PUCCH and the PUSCH. This can simplify the UE operation.

### - Option 7-2

The UE may control to simultaneously transmit the first UL transmission (for example, the HP-PUCCH/HP-PUSCH) and the second UL transmission (for example, the LP-PUCCH/PUSCH). When option 7-2 is applied, different UE operations may be applied, depending on whether or not the TRPs/panels/CORESET pool indices associated with the first UL transmission (for example, the HP-PUCCH/HP-PUSCH) and the second UL transmission (for example, the LP-PUCCH/PUSCH) are the same.

### <Supplements>

### {Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, a format of the DCI, or the like.

Notification of any information to a UE in the above-described embodiments may be performed periodically, semipersistently, or aperiodically.

### {Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in existing standards being included in a MAC subheader.

When the notification is performed by UCI, the notification may be transmitted by using a PUCCH or a PUSCH.

Notification of any information from a UE in the above-described embodiments may be performed periodically, semipersistently, or aperiodically.

### {Regarding Application of Each Embodiment}

At least one of the above-described embodiments may be applied to a case satisfying a specific condition. The specific condition may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:
- supporting of specific processing/operation/control/information (for example, STxMP) regarding at least one of the embodiments described above,
- supporting of STxMP PUCCH+PUCCH,
- supporting of STxMP PUCCH+PUSCH,
- supporting of new UE operation related to overlap elimination between a PUCCH and a PUCCH,
- supporting of new UE operation related to overlap elimination between a PUCCH and a PUSCH,
- supporting of multiplexing of UCI with a different priority to a PUCCH/PUSCH.

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of dynamic switching of each scheme/transmission scheme of STxMP, any RRC parameter for a specific release (for example, Rel. 18/19), or the like.

When the UE does not support at least one of the specific UE capabilities above or is not configured with the specific information, operation of Rel. 15/16 may be applied, for example.

### (Supplementary Note)

Regarding one embodiment of the present disclosure, the following supplementary notes of the invention will be given.

### {Supplementary Note 1-1}

A terminal including: a control section that, when a plurality of uplink control channels (PUCCHs) associated with different transmission/reception points or different control resource set pool indices overlap in a time domain, applies different UE operations in UL transmission, based on at least one of a feedback mode of a transmission confirmation signal (HARQ-ACK) and a content included in uplink control information (UCI) corresponding to each of the plurality of PUCCHs; and a transmitting section that transmits at least one of the plurality of PUCCHs.

### {Supplementary Note 1-2}

The terminal according to supplementary note 1-1, wherein when "joint" is configured as the feedback mode or the HARQ-ACK is not included in the UCI, the control section controls to transmit the UCI corresponding to each of the plurality of PUCCHs by using one PUCCH.

### {Supplementary Note 1-3}

The terminal according to supplementary note 1-1 or 1-2, wherein when "separate" is configured as the feedback mode and the HARQ-ACK is included in the UCI, the control section controls to transmit the plurality of PUCCHs.

### {Supplementary Note 1-4}

The terminal according to any one of supplementary notes 1-1 to 1-3, wherein when "joint" is configured as the feedback mode or the HARQ-ACK is not included in the UCI, the UE operation is same as the UE operation applied when the plurality of PUCCHs associated with a same transmission/reception point or a same control resource set pool index overlap in the time domain.

### {Supplementary Note 2-1}

A terminal including: a control section that, when an uplink control channel (PUCCH) and an uplink shared channel (PUSCH) associated with different transmission/reception points or different control resource set pool indices overlap in a time domain, applies different UE operations in UL transmission, based on at least one of a feedback mode of a transmission confirmation signal (HARQ-ACK) and a content included in uplink control information (UCI) corresponding to the PUCCH; and a transmitting section that transmits at least one of the PUCCH and the PUSCH.

### {Supplementary Note 2-2}

The terminal according to supplementary note 2-1, wherein when "joint" is configured as the feedback mode or the HARQ-ACK is not included in the UCI, the control section controls to transmit the UCI corresponding to the PUCCH by using the PUSCH.

### {Supplementary Note 2-3}

The terminal according to supplementary note 2-1 or 2-2, wherein when "separate" is configured as the feedback mode and the HARQ-ACK is included in the UCI, the control section controls to transmit both of the PUCCH including the UCI and the PUSCH.

### {Supplementary Note 2-4}

The terminal according to any one of supplementary notes 2-1 to 2-3, wherein when "joint" is configured as the feedback mode or the HARQ-ACK is not included in the UCI, the UE operation is same as the UE operation applied when the PUCCH and the PUSCH associated with a same transmission/reception point or a same control resource set pool index overlap in the time domain.

### {Supplementary Note 3-1}

A terminal including: a receiving section that receives information indicating enabling of multiplexing of pieces of uplink control information (UCI) having different priorities; a control section that, when a plurality of uplink control channels (PUCCHs) having different priorities overlap in a time domain, controls UE operation in UL transmission, based on at least one of a transmission/reception point or a control resource set pool index associated with each of the plurality of PUCCHs and the UCI corresponding to each of the plurality of PUCCHs; and a transmitting section that transmits at least one of the plurality of PUCCHs.

### {Supplementary Note 3-2}

The terminal according to supplementary note 3-1, wherein when the plurality of PUCCHs are associated with a same transmission/reception point or a same control resource set pool index, the control section controls to transmit at least a part of the UCI corresponding to the PUCCH having a low priority by using the PUCCH having a high priority.

### {Supplementary Note 3-3}

The terminal according to supplementary note 3-1 or 3-2, wherein when the plurality of PUCCHs are associated with different transmission/reception points or different control resource set pool indices, the control section controls to transmit the plurality of PUCCHs.

### {Supplementary Note 3-4}

The terminal according to any one of supplementary notes 3-1 to 3-3, wherein when the plurality of PUCCHs are associated with different transmission/reception points or different control resource set pool indices, the control section applies different UE operations in the UL transmission, based on a feedback mode of a transmission confirmation signal (HARQ-ACK).

### {Supplementary Note 4-1}

A terminal including: a receiving section that receives information indicating enabling of multiplexing of pieces of uplink control information (UCI) having different priorities; a control section that, when an uplink control channel (PUCCH) and an uplink shared channel (PUSCH) having different priorities overlap in a time domain, controls UE operation in UL transmission, based on at least one of a transmission/reception point or a control resource set pool index associated with each of the PUCCH and the PUSCH, the UCI corresponding to the PUCCH, and the UCI corresponding to the PUSCH; and a transmitting section that transmits at least one of the PUCCH and the PUSCH.

### {Supplementary Note 4-2}

The terminal according to supplementary note 4-1, wherein when the PUCCH and the PUSCH are associated with a same transmission/reception point or a same control resource set pool index, the control section controls to transmit at least a part of the UCI corresponding to the PUCCH by using the PUSCH.

### {Supplementary Note 4-3}

The terminal according to supplementary note 4-1 or 4-2, wherein when the PUCCH and the PUSCH are associated with different transmission/reception points or different control resource set pool indices, the control section controls to transmit both of the PUCCH and the PUSCH.

### {Supplementary Note 4-4}

The terminal according to any one of supplementary notes 4-1 to 4-3, wherein when the PUCCH and the PUSCH are associated with different transmission/reception points or different control resource set pool indices, the control section applies different UE operations in the UL transmission, based on a feedback mode of a transmission confirmation signal (HARQ-ACK).

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

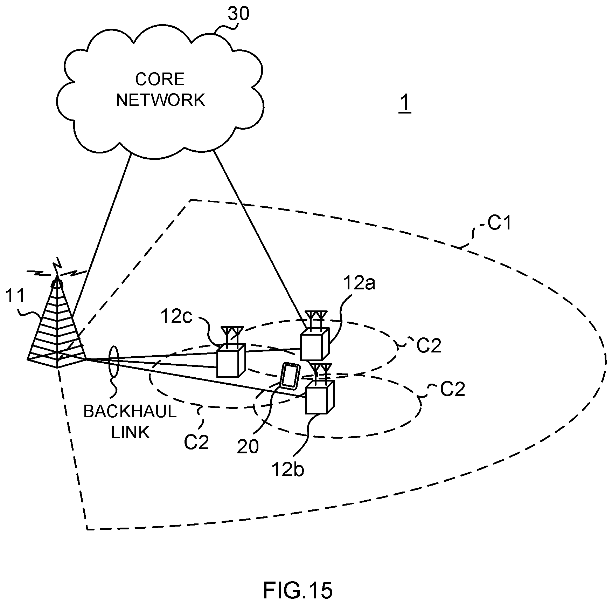

FIG. 15 is a diagram to show an example of a schematic structure of the radio communication system according to one embodiment. The radio communication system 1 (which may be simply referred to as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NF), such as a User Plane Function (UPF), an Access and Mobility management Function (AMF), a Session Management Function (SMF), Unified Data Management (UDM), an Application Function (AF), a Data Network (DN), a Location Management Function (LMF), and operation, administration, and maintenance (Management) (OAM). Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cellspecific reference signal (CRS), a channel state informationreference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

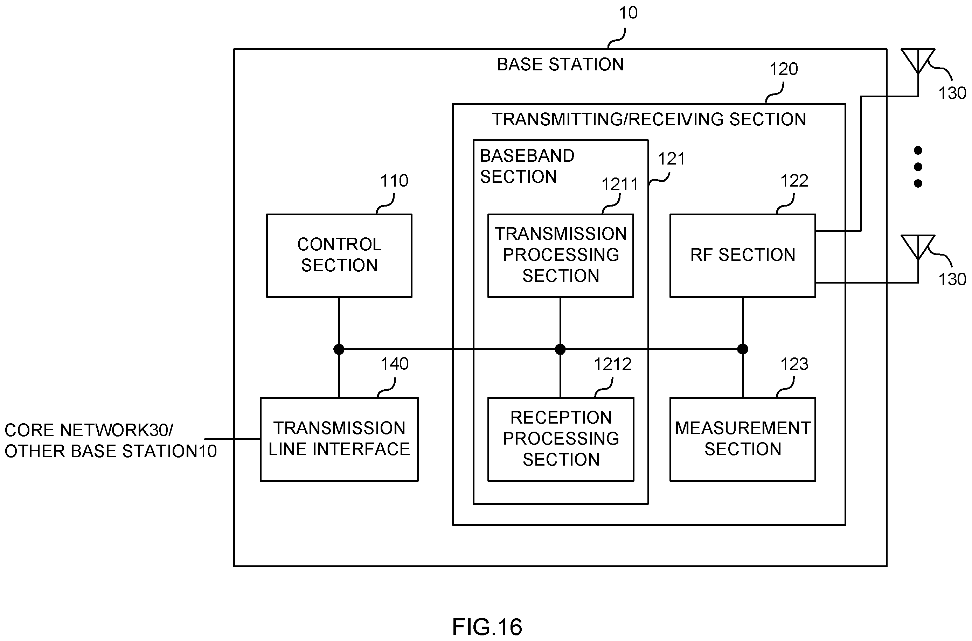

FIG. 16 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analogdigital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 (for example, a network node providing NF) or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit information related to a feedback mode of a transmission confirmation signal (HARQ-ACK). The control section 110 may, when a plurality of uplink control channels (PUCCHs) associated with different transmission/reception points or different control resource set pool indices overlap in a time domain, indicate operation of a terminal in UL transmission, based on feedback mode information of the HARQ-ACK. The control section 110 may, when an uplink control channel (PUCCH) and an uplink shared channel (PUSCH) associated with different transmission/reception points or different control resource set pool indices overlap in a time domain, indicate operation of the terminal in UL transmission, based on the information related to the feedback mode of the HARQ-ACK.

The transmitting/receiving section 120 may transmit information indicating enabling of multiplexing of pieces of uplink control information (UCI) having different priorities to a terminal. The transmitting/receiving section 120 may receive at least one of a plurality of PUCCHs. The control section 110 may, when the plurality of uplink control channels (PUCCHs) having different priorities overlap in a time domain, determine operation of the terminal in UL transmission, based on at least one of a transmission/reception point or a control resource set pool index associated with each of the plurality of PUCCHs and the UCI corresponding to each of the plurality of PUCCHs. The control section 110 may, when an uplink control channel (PUCCH) and an uplink shared channel (PUSCH) having different priorities overlap in a time domain, may determine operation of the terminal in UL transmission, based on at least one of a transmission/reception point or a control resource set pool index associated with each of the PUCCH and the PUSCH, the UCI corresponding to the PUCCH, and the UCI corresponding to the PUSCH.

### (User Terminal)

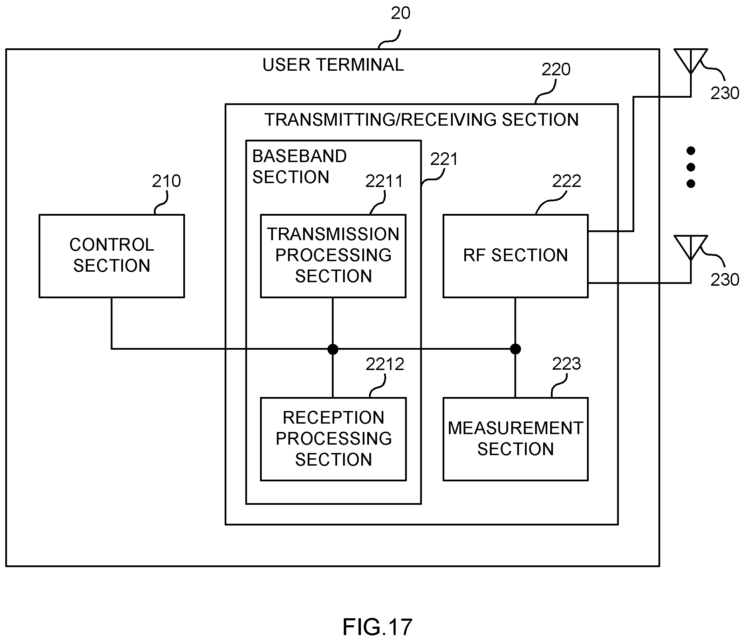

FIG. 17 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analogdigital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the measurement section 223 may derive channel measurement for CSI calculation, based on a resource for channel measurement. The resource for channel measurement may be, for example, a non zero power (NZP) CSI-RS resource. The measurement section 223 may derive interference measurement for CSI calculation, based on a resource for interference measurement. The resource for interference measurement may be at least one of an NZP CSI-RS resource for interference measurement, a CSI-interference measurement (IM) resource, and the like. Note that CSI-IM may be referred to as CSI-interference management (IM), and may be interchangeably interpreted as zero power (ZP) CSI-RS. Note that, in the present disclosure, the CSI-RS, the NZP CSI-RS, the ZP CSI-RS, the CSI-IM, a CSI-SSB, and the like may be interchangeably interpreted.

Note that the transmitting section and the receiving section of the user terminal 20 in the present disclosure may be constituted with at least one of the transmitting/receiving section 220 and the transmitting/receiving antennas 230.

The transmitting/receiving section 220 may receive information related to a feedback mode of a transmission confirmation signal (HARQ-ACK). The control section 210 may, when a plurality of uplink control channels (PUCCHs) associated with different transmission/reception points or different control resource set pool indices overlap in a time domain, may control to apply different UE operations in UL transmission, based on at least one of the feedback mode of the transmission confirmation signal (HARQ-ACK) and a content included in uplink control information (UCI) corresponding to each of the plurality of PUCCHs.

When "joint" is configured as the feedback mode or the HARQ-ACK is not included in the UCI, the control section 210 may control to transmit the UCI corresponding to each of the plurality of PUCCHs by using one PUCCH. When "separate" is configured as the feedback mode and the HARQ-ACK is included in the UCI, the control section 210 may control to transmit the plurality of PUCCHs.

When "joint" is configured as the feedback mode or the HARQ-ACK is not included in the UCI, the UE operation may be same as the UE operation applied when the plurality of PUCCHs associated with a same transmission/reception point or a same control resource set pool index overlap in the time domain.

The control section 210 may, when an uplink control channel (PUCCH) and an uplink shared channel (PUSCH) associated with different transmission/reception points or different control resource set pool indices overlap in a time domain, may control to apply different UE operations in UL transmission, based on at least one of a feedback mode of a transmission confirmation signal (HARQ-ACK) and a content included in uplink control information (UCI) corresponding to the PUCCH.

When "joint" is configured as the feedback mode or the HARQ-ACK is not included in the UCI, the control section 210 may control to transmit the UCI corresponding to the PUCCH by using the PUSCH. When "separate" is configured as the feedback mode and the HARQ-ACK is included in the UCI, the control section 210 may control to transmit both of the PUCCH including the UCI and the PUSCH.

When "joint" is configured as the feedback mode or the HARQ-ACK is not included in the UCI, the UE operation may be same as the UE operation applied when the PUCCH and the PUSCH associated with a same transmission/reception point or a same control resource set pool index overlap in the time domain.

The transmitting/receiving section 220 may receive information indicating enabling of multiplexing of pieces of uplink control information (UCI) having different priorities. The control section 210 may, when a plurality of uplink control channels (PUCCHs) having different priorities overlap in a time domain, control UE operation in UL transmission, based on at least one of a transmission/reception point or a control resource set pool index associated with each of the plurality of PUCCHs and the UCI corresponding to each of the plurality of PUCCHs.

When the plurality of PUCCHs are associated with a same transmission/reception point or a same control resource set pool index, the control section 210 may control to transmit at least a part of the UCI corresponding to the PUCCH having a low priority by using the PUCCH having a high priority. When the plurality of PUCCHs are associated with different transmission/reception points or different control resource set pool indices, the control section 210 may control to transmit the plurality of PUCCHs. When the plurality of PUCCHs are associated with different transmission/reception points or different control resource set pool indices, the control section 210 may control to apply different UE operations in the UL transmission, based on a feedback mode of a transmission confirmation signal (HARQ-ACK).

The control section 210 may, when an uplink control channel (PUCCH) and an uplink shared channel (PUSCH) having different priorities overlap in a time domain, control UE operation in UL transmission, based on at least one of a transmission/reception point or a control resource set pool index associated with each of the PUCCH and the PUSCH, UCI corresponding to the PUCCH, and the UCI corresponding to the PUSCH.

When the PUCCH and the PUSCH are associated with a same transmission/reception point or a same control resource set pool index, the control section 210 may control to transmit at least a part of the UCI corresponding to the PUCCH by using the PUSCH. When the PUCCH and the PUSCH are associated with different transmission/reception points or different control resource set pool indices, the control section 210 may control to transmit both of the PUCCH and the PUSCH. When the PUCCH and the PUSCH are associated with different transmission/reception points or different control resource set pool indices, the control section 210 may control to apply different UE operations in the UL transmission, based on a feedback mode of a transmission confirmation signal (HARQ-ACK).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

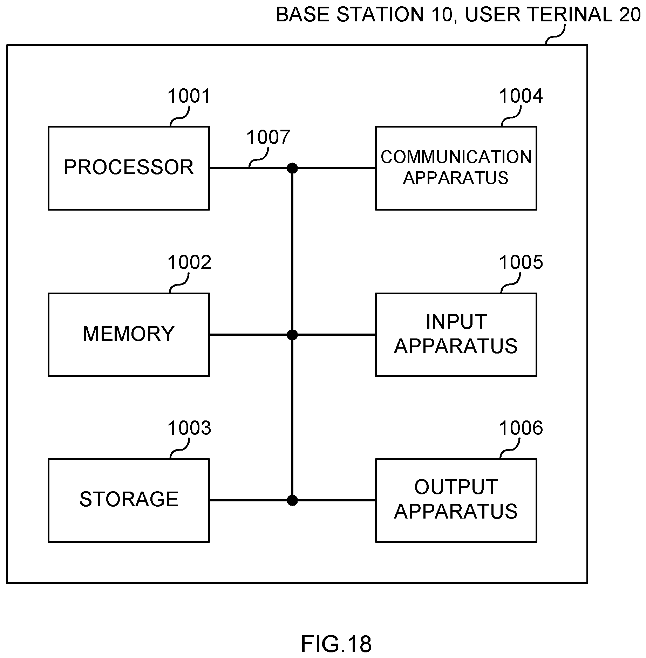

For example, a base station, a user terminal, and so on according to one embodiment of the present disclosure may function as a computer that executes the processes of the radio communication method of the present disclosure. FIG. 18 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", a "layer", "the number of layers", a "rank", a "resource", a "resource set", a "beam", a "beam width", a "beam angular degree", an "antenna", an "antenna element", a "panel", a "UE panel", a "transmission entity", a "reception entity", and so on may be used interchangeably.

Note that, in the present disclosure, the "antenna port" may be used interchangeably with an "antenna port for an arbitrary signal/channel" (for example, a demodulation reference signal (DMRS) port). In the present disclosure, the "resource" may be used interchangeably with a "resource for an arbitrary signal/channel" (e.g., a reference signal resource, an SRS resource, and the like). The resource may include time/frequency/code/space/power resource. The spatial domain transmission filter may include at least one of a spatial domain transmission filter and a spatial domain reception filter.

The group may include at least one of, for example, a spatial relationship group, a code division multiplexing (CDM) group, a reference signal (RS) group, a control resource set (CORESET) group, a PUCCH group, an antenna port group (for example, a DMRS port group), a layer group, a resource group, a beam group, an antenna group, a panel group, and the like.

In the present disclosure, a "beam", an "SRS resource indicator (SRI)", a "CORESET", a "CORESET pool", a "PDSCH", a "PUSCH", a "codeword (CW)", a "transport block (TB)", an "RS", and the like may be interchangeably used.

In the present disclosure, a "TCI state", a "downlink TCI state (DL TCI state)", an "uplink TCI state (UL TCI state)", a "unified TCI state", a "common TCI state", a "joint TCI state", and the like may be used interchangeably.

In the present disclosure, "QCL", "QCL assumption", "QCL relationship", "QCL type information", "QCL property/properties", "specific QCL type (e.g., type A, type D) property", "specific QCL type (e.g., type A, type D)", and the like may be used interchangeably.

In the present disclosure, an "index", an "identifier (ID)", an "indicator", "indication", a "resource ID", and the like may be used interchangeably. In the present disclosure, a sequence, a list, a set, a group, a cluster, a subset, and the like may be used interchangeably.

A spatial relation information identifier (ID) (TCI state ID) and spatial relation information (TCI state) may be interchangeably used. "Spatial relation information (TCI state)" may be used interchangeably with "a set of spatial relation information (TCI state)", "one or a plurality of spatial relation information", and the like. The TCI state and the TCI may be used interchangeably. The spatial relation information and the spatial relation may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

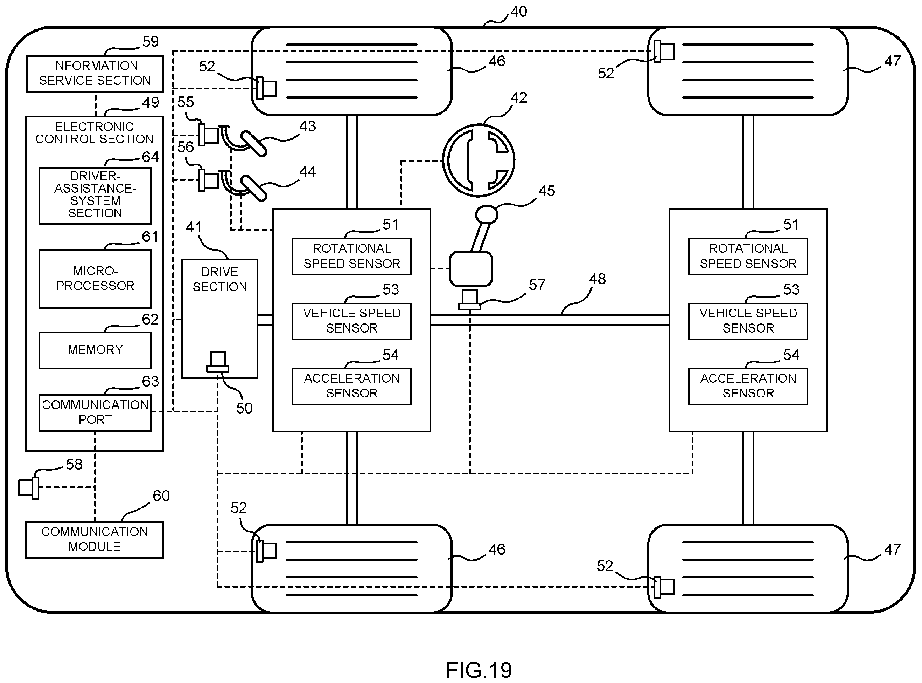

FIG. 19 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action. In the present disclosure, "decide/deciding (determine/determining)" may be interchangeably interpreted as the above-described actions.

In the present disclosure, "decide/deciding (determine/determining)" may be used interchangeably with "assume/assuming", "expect/expecting", "consider/considering", and the like. Note that, in the present disclosure, "not expect to" may be used interchangeably with "expect not to".

In the present disclosure, "expect" may be used interchangeably with "be expected". For example, "expect(s) ..." ("..." may be expressed using, for example, a that-clause, a to-infinitive, or the like) may be used interchangeably with "be expected ...". "Does not expect ..." may be used interchangeably with "be not expected ...". Furthermore, "an apparatus A is not expected ..." may be used interchangeably with "an apparatus B other than the apparatus A does not expect ... for the apparatus A" (for example, when the apparatus A is a UE, the apparatus B may be a base station).

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

In the present disclosure, "when A, B", "if A, (then) B", "B upon A", "B in response to A", "B based on A", "B during/while A", "B before A", "B (at the same time as)/on A", "B after A", "B since A", "B until A", and the like may be used interchangeably. Note that A and B here may be replaced with appropriate expressions such as nouns, dynamic nouns, and normal sentences, as appropriate, depending on the context. The time difference between A and B may be substantially 0 (immediately after or immediately before). A time offset may be applied to the time at which A occurs. For example, "A" may be used interchangeably with "before/after the time offset at which A occurs". The time offset (for example, one or more symbols/slots) may be defined in advance or may be specified by the UE based on the notified information.

In the present disclosure, timing, time point, time, time instance, any time unit (e.g., slot, sub-slot, symbol, subframe), period, occasion, a resource, or the like may be used interchangeably.

Now, although the invention according to the present disclosure has been described in detail above, it is apparent to a person skilled in the art that the invention according to the present disclosure is by no means limited to the embodiments described in the present disclosure. The description of the present disclosure is provided only for the purpose of explaining examples, and should by no means be construed to limit the invention according to the present disclosure in any way.

## Claims

1. A terminal comprising:
a control section that, when an uplink control channel (PUCCH) and an uplink shared channel (PUSCH) associated with different transmission/reception points or different control resource set pool indices overlap in a time domain, applies different UE operations in UL transmission, based on at least one of a feedback mode of a transmission confirmation signal (HARQ-ACK) and a content included in uplink control information (UCI) corresponding to the PUCCH; and
a transmitting section that transmits at least one of the PUCCH and the PUSCH.

2. The terminal according to claim 1, wherein
when "joint" is configured as the feedback mode or the HARQ-ACK is not included in the UCI, the control section controls to transmit the UCI corresponding to the PUCCH by using the PUSCH.

3. The terminal according to claim 1, wherein
when "separate" is configured as the feedback mode and the HARQ-ACK is included in the UCI, the control section controls to transmit both of the PUCCH including the UCI and the PUSCH.

4. The terminal according to claim 1, wherein
when "joint" is configured as the feedback mode or the HARQ-ACK is not included in the UCI, the UE operation is same as the UE operation applied when the PUCCH and the PUSCH associated with a same transmission/reception point or a same control resource set pool index overlap in the time domain.

5. A radio communication method for a terminal, the radio communication method comprising:
when an uplink control channel (PUCCH) and an uplink shared channel (PUSCH) associated with different transmission/reception points or different control resource set pool indices overlap in a time domain, applying different UE operations in UL transmission, based on at least one of a feedback mode of a transmission confirmation signal (HARQ-ACK) and a content included in uplink control information (UCI) corresponding to the PUCCH; and
transmitting at least one of the PUCCH and the PUSCH.

6. A base station comprising:
a transmitting section that transmits information related to a feedback mode of a transmission confirmation signal (HARQ-ACK) to a terminal; and
a control section that, when an uplink control channel (PUCCH) and an uplink shared channel (PUSCH) associated with different transmission/reception points or different control resource set pool indices overlap in a time domain, indicates operation of the terminal in UL transmission, based on the information related to the feedback mode of the HARQ-ACK.
